(19) Europäisches Patentamt
European Patent Office
Office européen des brevets

(11) **EP 1 640 398 B1**

(12) **EUROPEAN PATENT SPECIFICATION**

(45) Date of publication and mention of the grant of the patent:
**19.03.2014 Bulletin 2014/12**

(21) Application number: **04746287.4**

(22) Date of filing: **16.06.2004**

(51) Int Cl.:
**C08G 63/85** (2006.01)    **B29C 49/00** (2006.01)

(86) International application number:
**PCT/JP2004/008818**

(87) International publication number:
**WO 2004/111105 (23.12.2004 Gazette 2004/52)**

(54) **TITANIUM-CONTAINING SOLUTIONS, CATALYSTS FOR PRODUCTION OF POLYESTER, PROCESSES FOR PRODUCTION OF POLYESTER RESINS, AND BLOW MOLDINGS OF POLYESTER**

TITANHALTIGE LÖSUNGEN, KATALYSATOREN FÜR DIE HERSTELLUNG VON POLYESTER, VERFAHREN ZUR HERSTELLUNG VON POLYESTERHARZEN UND POLYESTER-BLASFORMKÖRPER

SOLUTIONS CONTENANT DU TITANE, CATALYSEURS POUR LA PRODUCTION DE POLYESTER, PROCESSUS DE PRODUCTION DE RESINES POLYESTER ET MOULAGES PAR SOUFFLAGE DE POLYESTER

(84) Designated Contracting States:
**DE FR GB IT**

(30) Priority: **17.06.2003   JP 2003172278**
**29.01.2004   JP 200421875**

(43) Date of publication of application:
**29.03.2006   Bulletin 2006/13**

(73) Proprietor: **Mitsui Chemicals, Inc.**
**Tokyo 105-7117 (JP)**

(72) Inventors:
• **MAEDA, Ken**
**Sodegaura-shi,**
**Chiba 299-0265 (JP)**

• **NABETA, Takashi**
**Sodegaura-shi,**
**Chiba 299-0265 (JP)**
• **NAGAYAMA, Tokio**
**Sodegaura-shi,**
**Chiba 299-0265 (JP)**
• **HORI, Hideshi**
**Kuga-gun,**
**Yamaguchi 740-0061 (JP)**

(74) Representative: **HOFFMANN EITLE**
**Patent- und Rechtsanwälte**
**Arabellastrasse 4**
**81925 München (DE)**

(56) References cited:
**EP-A1- 1 270 640        EP-A1- 1 475 402**
**US-A1- 2002 193 555**

**Description**

<u>Technical Field</u>

The present invention relates to a titanium-containing solution, a process for the preparation of the solution, a catalyst for polyester preparation comprising the solution, a process for the preparation of a polyester resin using the catalyst, and a blow molded product comprising the polyester resin. In particular, the invention relates to a titanium-containing solution which has excellent storage stability and contains a titanium component at a high concentration; a catalyst for polyester preparation comprising the titanium-containing solution, which has excellent supply uniformity, exhibits high catalytic performance, and does not have adverse effect on the quality of the aliphatic diols to be recovered and recycled; a process for the preparation of a polyester resin using the catalyst; and a blow molded product comprising the polyester resin.

<u>Background Art</u>

Polyester resins such as polyethylene terephthalate are excellent in mechanical strength, heat resistance, transparency and gas barrier properties, and have been favorably used as materials of the containers to be filled with beverages such as juices, soft drinks and carbonated drinks, and as materials for films, sheets, fibers and the like.

Such polyester resins are usually prepared using a dicarboxylic acid such as terephthalic acid and an aliphatic diol such as ethylene glycol as starting materials, by forming a lower condensate (ester oligomer) through an esterification reaction and subsequently polymerizing the lower condensate through a deglycolation reaction (liquid phase polycondensation) in the presence of a polycondensation catalyst.

Titanium is known to be an element having a function of promoting the polycondensation reaction of a lower condensate, and various investigations have been made in order to make use of titanium compounds as the materials for polycondensation catalysts. Alkoxytitanium compounds in particular are suitable as the materials for polycondensation catalysts in the aspects of cost and availability.

In the case of supplying a titanium compound to a process of polymerizing polyester as a catalyst, in order to prevent localization of the reaction by achieving uniform dispersion of the catalyst, the titanium compound is typically supplied as a titanium catalyst solution in which the titanium compound is preliminarily mixed with a suitable solvent, for example, an aliphatic diol that is an ingredient of the starting materials for polyester preparation.

However, the titanium catalyst solution has a problem that insoluble compounds may be formed as a result of the contact between the titanium compound and the aliphatic diol. For example, it is known that when titanium tetraalkoxide is mixed with ethylene glycol, 1,3-propanediol, 1,4-butanediol or the like, a precipitate is generated depending on the titanium concentration (F. Mizukami, et al., Stud. Surf. Sci. Catal., 31, p. 45 (1987)). It is believed that generation of the precipitate is due to the binding of titanium atoms with aliphatic diol in a network-like form, resulting in the formation of a high polymerization product. When precipitates are contained in the catalyst solution as such, the catalyst undergoes liquid-solid separation, and consequently the supply to the polymerization process becomes non-uniform, thereby stable operation of the process being difficult, as well as unwanted foreign matters being present in the resulting polyester, which causes impairment of the resin performance such as appearance and strength.

On the other hand, when the titanium concentration in the catalyst solution is decreased to prevent the generation of precipitates, the amount of the aliphatic diol in the solvent to be supplied together with the catalyst upon supplying a necessary amount of the titanium catalyst to the polymerization process increases, and thus such increase in the amount of diol may possibly have adverse effect on the polymerization reaction. Further, although a homogeneous and clear solution may be obtained just after the catalyst production by lowering the titanium concentration in the catalyst solution, a precipitate may be generated over time during the storage of the catalyst solution.

For the above-described reasons, in the production of titanium catalyst, there has been a need of techniques to realize homogeneity of the catalyst solution and to increase the titanium concentration as high as possible, and thus various investigations have been carried out for this purpose.

In the production of a catalyst for polyester preparation by mixing an alkoxytitanium compound and an aliphatic diol, known is a technique of adding various compounds as a solubility promoter so as to prevent precipitate generation and to obtain a homogeneous solution.

For the solubility promoter, for example, organic silicon compounds or organic zirconium compounds (WO 99/54039), alkali metal compounds (JP-A No. 7-207010), water (JP-B No. 3-72653), organic carboxylic acids (JP-A No. 56-129220), bifunctional organic acids (JP-T No. 2002-543227), diethylene glycol (JP-A No. 58-118824), hindered phenol compounds (JP No. 2987853), phosphorus compounds (JP-B No. 61-25738), combination of chelating ligand compounds and phosphorus compounds (JP-A No. 10-81646), combination of basic compounds and phosphorus compounds (JP-T No. 2001-524536) and the like have been proposed.

However, during the preparation of these titanium catalysts, the compounds added as the solubility promoter may, in addition to having a function of aiding in solubilization of titanium compounds, undesirably interact with the active site of the titanium catalyst, thereby it causing deterioration of the catalyst performance. Furthermore, in a polymerization process generally operated at a high vacuum condition, the solubility promoters may volatilize together with the aliphatic diols and enter the process of recovery and purification of low boiling point fraction, and as a result, it may have adverse effect on the quality of the aliphatic diols to be recovered and recycled.

Therefore, there is a demand for a titanium catalyst solution which does not adversely affect the titanium catalyst performance and also does not adversely affect the quality of the aliphatic diols to be recovered and recycled.

In addition, as a second problem in the use of titanium compounds, the compounds have a high polycondensation activity per weight of metal, while they also have strong tendency to cause undesired polyester degradation and strong tendency to cause deterioration of the resin quality, such as coloration of the resin during the polycondensation process, side production of low molecular weight compounds during the process of melt molding, a decrease in molecular weight, or the like.

As a result, the polyester resins prepared by using these titanium compounds as a polycondensation catalyst have low stability, and generation of acetaldehyde due to thermal decomposition during melt molding or a decrease in molecular weight occurs to a higher extent in these resins, compared with the conventional polyester resins prepared by using antimony compounds, germanium compounds or the like as a polycondensation catalyst. Thus, the aforementioned polyester resins cannot be suitably used as the material for beverage containers.

As a countermeasure to these problems of titanium catalyst, a titanium compound modified so as to reduce undesired polyester decomposition and maintain high activity has been proposed. For example, it is disclosed that when titanium dioxide having an average primary particle size of 100 nm or less is used as the titanium compound, a high activity catalyst for polyester polycondensation can be obtained (JP-A No. 2000-119383).

However, according to experiments reproduced by the present inventors, it was confirmed that the activity was very low, compared with that of known titanium-based catalysts such as titanium alkoxide, titanium tetrachloride, titanyl oxalate, orthotitanic acid or the like.

It is also described in JP-A No. 2001-200045 that when a titanium compound containing titanium oxide as the main component and having a molecular weight of 500 to 100,000 (g/mol) is used as the titanium compound, a catalyst for polyester polymerization which yields polyester resins having excellent formability and heat resistance can be obtained. However, according to experiments reproduced by the present inventors, it was confirmed that the titanium compounds described in the above-mentioned literatures have low solubility in ethylene glycol and thus cannot be applied to the process for preparation of polyethylene terephthalate wherein the catalyst is generally added in the form of an ethylene glycol solution.

Thus, it is a first object of the invention to provide a titanium-containing solution having excellent storage stability and also containing the titanium component at a high concentration. Another aspect of the invention is to provide a catalyst for polyester preparation comprising this titanium-containing solution, which has excellent supply uniformity, exhibits high catalyst performance and does not have adverse effect on the quality of the aliphatic diols to be recovered and recycled. A further aspect of the invention is to provide a process for preparation of a polyester resin using the catalyst, and a blow molded product comprising the polyester resin.

It is a second object of the invention to provide a catalyst for polyester preparation comprising the titanium-containing solution and having a higher activity than the conventional titanium-containing solutions, and to provide a process for preparation of a polyester resin using the catalyst and exhibiting high productivity, and a high-quality blow molded product comprising the polyester resin obtained by the process for preparation.

Disclosure of the Invention

Taking account of the technical situations described above, the present inventors conducted intensive studies on titanium-containing solutions and catalysts for polyester preparation, and found that by using a titanium-containing solution characterized by containing titanium, an aliphatic diol and a polyhydric alcohol having a valency of 3 or greater, a titanium-containing solution which has excellent storage stability and also contains the titanium component at a high concentration can be obtained, and a catalyst for polyester preparation which has excellent supply uniformity, exhibits high catalyst performance, and does not have adverse effect on the quality of the aliphatic diol to be recovered and recycled, also can be obtained. Thus, they completed the invention. They also found that as the titanium raw materials such as those which would impart homogeneity and stability to the catalyst solution, a polymeric titanium compound including not more than 100 units, more preferably a monomeric or polymeric titanium compound including not more than 20 units, and particularly preferably a monomeric titanium compound, is suitable.

A first embodiment of the invention is:

(1) a titanium-containing solution according to present claim 1 containing titanium, an aliphatic diol and a polyhydric alcohol having a valency of 3 or greater, which contains (A) 0.05 to 20% by weight of a titanium compound, (B) 4 to 99% by weight of an aliphatic diol, and (C) 0.1 to 95% by weight of a polyhydric alcohol having a valency of 3 or greater;

the titanium-containing solution as described in (1), wherein the titanium compound used for preparing the solution is a polymer including not more than 100 units;

(2) the titanium-containing solution as described in (1), which further contains water and/or a basic compound;

(3) a process for preparation of a titanium-containing solution containing a titanium compound, an aliphatic diol and a polyhydric alcohol having a valency of 3 or greater, wherein the solution uses (A) 0.05 to 20% by weight of a titanium compound, (B) 4 to 99% by weight of an aliphatic diol, and (C) 0.1 to 95% by weight of a polyhydric alcohol having a valency of 3 or greater, with respect to the total amount of the titanium-containing solution; and

(4) the process for preparation of a titanium-containing solution as described in (4), wherein water and/or the basic compound is used in a total amount of 50% by weight or less.

The present inventors found that by using a titanium-containing solution in which the particle size of the titanium compound in the aliphatic diol solvent, an ingredient of the starting materials for polyester preparation, falls within a specific size range, a polyester resin can be obtained on an excellent polymerization activity. Thus, they completed the invention.

(6) a titanium-containing solution, wherein the particle size of the titanium-containing compound in the solution is mainly from 0.4 nm to 5 nm.

Here, the expression "particle size is mainly from 0.4 nm to 5 nm" means that the proportion of the particles having a particle size of from 0.4 nm to 5 nm is 50% or greater, and more preferably 80% or greater, as the volume proportion of the titanium-containing compound. Furthermore, preferred embodiments of the invention are as follows:

(7) the titanium-containing solution as described in (6), which contains an aliphatic diol such that the molar ratio of the diol component and titanium (ratio of aliphatic diol/titanium atoms) is 10 or greater.

Further, the invention provides a catalyst for polyester preparation as described in (8), a process for preparation of a polyester resin as described in (9), and a blow molded product made of polyester as described in (10).

(8) A catalyst for polyester preparation comprising the titanium-containing solution as described in any one of (1), (2), (3), (6) and (7), and the titanium-containing solution obtained by the process for preparation as described in (4) or (5);

(9) a process for preparation of a polyester resin, wherein in the presence of the catalyst for polyester preparation as described in (8), a polyester resin is prepared by polycondensing an aromatic dicarboxylic acid or an ester-forming derivative thereof with an aliphatic diol or an ester-forming derivative thereof; and

(10) a blow molded product comprising the polyester resin obtained by the process as described in (9).

Brief Description of the Drawings

Fig. 1 is a diagram illustrating the stepped rectangular plate-like molded product that is used as a sample for the measurement of the amount of a cyclic trimer of the invention.

Fig. 2 is a graph showing the results for the measurement of particle size distribution of the catalyst of Example 28. The horizontal axis represents the particle diameter (unit: nm), and the vertical axis represents the degree (arbitrary unit).

Fig. 3 is a transmission electron micrograph of the catalyst of Example 30, from which solvent has been removed.

Fig. 4 is a transmission electron micrograph of the catalyst of Example 30, which has been irradiated with an electronic beam for 10 minutes after solvent removal.

(Reference Numerals)

Fig. 1:

A: Thickest portion of the stepped rectangular plate-like molded product

B: Middle portion of the stepped rectangular plate-like molded product

C: Thinnest portion of the stepped rectangular plate-like molded product

Best Mode for Carrying Out the Invention

(First Invention)

Hereinafter, the first embodiment of the present invention will be described in detail.

The first embodiment of the invention relates to a titanium-containing solution characterized by containing titanium, an aliphatic diol and a polyhydric alcohol having a valency of 3 or greater. It also relates to a catalyst for polyester preparation comprising the titanium-containing solution composition, a process for preparation of a polyester resin using the catalyst, a polyester resin obtained by using the catalyst, and a blow molded product comprising the polyester resin.

The content of titanium in the titanium-containing solution according to the invention is not particularly limited, but it is preferably 0.05 to 20% by weight, and more preferably 0.1 to 10% by weight in terms of titanium atoms. The content of titanium atoms can be measured by, for example, ICP analysis. When the content of titanium atoms is less than 0.05% by weight, the amount of the solvent (aliphatic diol) added may be increased, thereby having an adverse effect on the polymerization reaction. On the other hand, when the content of titanium atoms is greater than 20% by weight, a precipitate may be generated in the titanium-containing solution, and thus a homogeneous solution may not be obtained.

The content of the aliphatic diol in the titanium-containing solution according to the invention is not particularly limited, but it is preferably 4 to 99% by weight, more preferably 19 to 94% by weight, and even more preferably 50 to 85% by weight. The content of the aliphatic diol can be measured by, for example, an analysis method such as gas chromatography.

The content of the polyhydric alcohol having a valency of 3 or greater in the titanium-containing solution according to the invention is not particularly limited, but it is preferably 0.1 to 95% by weight, more preferably 5 to 80% by weight, and even more preferably 15 to 50% by weight. The content of the polyhydric alcohol having a valency of 3 or greater can be measured by, for example, an analysis method such as gas chromatography. When the content of the polyhydric alcohol having a valency of 3 or greater is less than 0.1% by weight, its effect as a solubility promoter may not be obtained. When the content of the polyhydric alcohol having a valency of 3 or greater is greater than 95% by weight, the effect as a solubility promoter may decrease on the contrary, whereby a precipitate may be generated in the titanium-containing solution, and thus a homogeneous solution may not be obtained.

Moreover, in the case of using the titanium-containing solution according to the invention as the catalyst for polyester polymerization as described below, when the content of the polyhydric alcohol having a valency of 3 or greater in the titanium-containing solution is less than 0.1% by weight, an excellent polymerization activity may not be obtained. When the content of the polyhydric alcohol having a valency of 3 or greater is greater than 95% by weight, the polymerization activity is enhanced, but there may be an adverse effect on the performance of the obtained polyester resin.

The titanium-containing solution according to the invention may further contain water and/or a basic compound, if necessary.

The content of water in the titanium-containing solution according to the invention is not particularly limited, but it is preferably 50% by weight or less, more preferably 50 ppm to 30% by weight, and even more preferably 100 ppm to 10% by weight, as the weight proportion with respect to the total amount of the titanium-containing solution after being prepared. When the content of water exceeds 50% by weight, a precipitate may be generated in the titanium-containing solution, and thus a homogeneous solution may not be obtained.

The content of the basic compound in the titanium-containing solution according to the invention is not particularly limited, but it is preferably 50% by weight or less, more preferably 50 ppm to 30% by weight, and even more preferably 100 ppm to 10% by weight, as the weight proportion with respect to the total amount of the titanium-containing solution after being prepared. When the amount of the basic compound added exceeds 50% by weight, its effect as a solubility promoter decreases, whereby a precipitate may be generated in the titanium-containing solution, and thus a homogeneous solution may not be obtained.

The titanium-containing solution according to the invention is prepared by using a titanium compound, an aliphatic diol and a polyhydric alcohol having a valency of 3 or greater as the starting materials.

The titanium compound used for preparing a titanium-containing solution according to the invention is a monomeric or polymeric titanium compound including not more than 100 units, more preferably a monomeric or polymeric titanium compound including not more than 20 units, and particularly preferably a monomeric titanium compound.

The titanium compound used for preparing the titanium-containing solution refers to the titanium starting material used in the final preparation of the solution. In the case where solid A is dissolved and dried to obtain solid B, and then a solution is prepared by dissolving the solid B, the aforementioned titanium compound refers to the solid B.

The degree of polymerization, which indicates the number of the units included in the titanium compound used, can be calculated from the molecular weight of the titanium compound and the titanium content. Specifically, the degree of polymerization (P) of the titanium compound is determined by the following equation:

[Equation 1]

$$P = (S \times W)/(100 \times 47.2)$$

wherein W is the molecular weight of the titanium compound, and S is the content of titanium atoms in the titanium compound (% by weight).

Here, the molecular weight of the titanium compound can be measured by a technique such as mass analysis, osmometry or cryoscopy, while the content of titanium atoms can be measured by a technique such as ICP.

Upon preparation of the titanium-containing solution according to the invention, when a polymeric titanium compound including more than 100 units is used, its solubility in the aliphatic diol may be insufficient. Also, since it is generally required to use a special technique in order to prepare a polymeric titanium compound that is larger than a monomeric compound with high purity, it is preferable to use a monomeric titanium compound, even from the viewpoint of availability.

Moreover, in the case of using the titanium-containing solution according to the invention as a catalyst for polyester polymerization as described below, a titanium-containing solution prepared by using a polymeric titanium compound including more than 100 units as the starting material, may have a lower polymerization activity compared with the titanium-containing solution prepared by using a polymeric titanium compound including not more than 100 units as the starting material.

Here, the term monomeric titanium compound refers to a compound in which a titanium atom contained in any one molecule is not bridged to another titanium atom via covalent bonding by means of a ligand.

The term polymeric titanium compound refers to a compound in which a titanium atom contained in any one molecule is bridged to another titanium atom via covalent bonding by means of a ligand. Accordingly, a coordination polymer type titanium compound in which a titanium atom and another titanium atom are bridged not via covalent bonding but via coordination bonding, by means of a ligand, is not considered as a polymeric titanium compound in the invention, but as a monomeric titanium compound. For example, titanium tetraethoxide in its pure form is considered as a monomer, whereas it exists as a trimer bonded by coordination bonding in a non-polar solvent. However, these different forms are all considered as the monomeric titanium compound according to the invention.

Examples of the above-described titanium compound include halogenated titanium compounds such as titanium tetrafluoride, titanium tetrachloride, titanium tetrabromide, titanium tetraiodide and hexafluorotitanic acid;

titanic acid compounds such as $\alpha$-titanic acid, $\beta$-titanic acid, ammonium titanate and sodium titanate;

titanium inorganic acid salt compounds such as titanium sulfate and titanium nitrate;

titanium-containing organometallic compounds such as tetramethyltitanium, tetraethyltitanium, tetrabenzyltitanium, tetraphenyltitanium and bis(cyclopentadienyl)titanium dichloride;

aryloxytitanium compounds such as tetraphenoxytitanium;

siloxytitanium compounds such as tetrakis(trimethylsiloxy)titanium and tetrakis(triphenylsiloxy)titanium;

titanium organic acid salt compounds such as titanium acetate, titanium propionate, titanium lactate, titanium citrate and titanium tartrate;

titanium amide compounds such as tetrakis (diethylamino) titanium and titanium tetrapyrrolide; the below-described alkoxytitanium compounds;

and the like. Among these, alkoxytitanium compounds are preferred.

Examples of the alkoxytitanium compounds include:

titanium tetraalkoxides such as titanium tetramethoxide, titanium tetraethoxide, titanium tetra-n-propoxide, titanium tetraisopropoxide, titanium tetra-n-butoxide and titanium tetra-2-ethylhexoxide;

condensed titanium alkoxides such as poly(dibutyl titanate), $Ti_7O_4(OC_2H_5)_{20}$ and $Ti_{16}O_{16}(OC_2H_5)_{32}$;

halogen-substituted titanium alkoxides such as chlorotitanium triisopropoxide and dichlorotitanium diethoxide;

carboxylic acid-substituted titanium alkoxides such as titanium acetate triisopropoxide and titanium methacrylate triisopropoxide;

phosphonic acid-substituted titanium alkoxides such as titanium tris(dioctylpyrophosphate)isopropoxide;

sulfonic acid-substituted titanium alkoxides such as titanium tris(dodecylbenzenesulfonate)isopropoxide;

alkoxytitanates such as ammonium hexaethoxytitanate, sodium hexaethoxytitanate, potassium hexaethoxytitanate and sodium hexa-n-propoxytitanate;

$\beta$-diketonate-substituted titanium alkoxides such as titanium bis(2,4-pentanedionate)diisopropoxide and titanium bis(ethylacetoacetate)diisopropoxide;

$\alpha$-hydroxycarboxylic acid-substituted titanium alkoxides such as titanium bis(ammonium lactate)diisopropoxide;

aminoalcohol-substituted titanium alkoxides such as titanium bis(triethanolamine)diisopropoxide and 2-aminoethoxytitanium triisopropoxide;

and the like. Among these, titanium tetraalkoxides are preferred.

These titanium compounds can be used individually or in combination of two or more species. These titanium compounds can be also used in combination with other compounds, as desired, by diluting with a solvent such as alcohols, or the like.

The aliphatic diol used in preparation of the titanium-containing solution according to the invention may be exemplified by ethylene glycol, propylene glycol, hexylene glycol, octylene glycol, 1,3-propanediol, 1,4-butanediol, 1,5-pentanediol, 1,6-hexanediol, 1,2-cyclohexanediol, 1,3-cyclohexanediol, 1,4-cyclohexanediol, 1,4-cyclohexanedimethanol or the like. Among these, ethylene glycol, 1,3-propanediol, 1,4-butanediol and 1,4-cyclohexanedimethanol are preferred, and ethylene glycol is more preferred. These aliphatic diols can be used individually or in combination of two or more species.

The polyhydric alcohol having a valency of 3 or greater that is used in preparation of the titanium-containing solution according to the invention, may be exemplified by glycerol, trimethylolpropane, erythritol, pentaerythritol, sorbitol, glucose, fructose, pullulan, cyclodextrin or the like. Among these, glycerol and trimethylolpropane are preferred, and glycerol is more preferred. These polyhydric alcohols having a valency of 3 or greater can be used individually or in combination of two or more species.

The titanium-containing solution according to the invention may be prepared by further using water and/or a basic compound as starting materials, if necessary.

Water is known to be effective as a solubility promoter upon dissolving a titanium compound in an aliphatic diol. However, according to the present inventors' investigations, combined use with polyhydric alcohol having a valency of 3 or greater can further improve its effect as a solubility promoter.

A basic compound is known to be effective as a solubility promoter upon dissolving a titanium compound in an aliphatic diol. However, according to the present inventors' investigations, combined use with polyhydric alcohol having a valency of 3 or greater can further improve its effect as a solubility promoter.

The basic compound used in preparation of the titanium-containing solution according to the invention refers to a compound that generates a proton acceptor (Brönsted base) or an electron donor (Lewis base) in an aliphatic diol solvent.

Examples of the basic compound include:

amine compounds such as ammonia, trimethylamine, triethylamine, pyrrolidine, morpholine, 1,4,7-triazacyclononane, aminoethanol, aniline and pyridine;
quaternary ammonium compounds such as tetramethylammonium hydroxide and tetraethylammonium hydroxide;
quaternary phosphonium compounds such as tetramethylphosphonium hydroxide and tetraethylphosphonium hydroxide;
alkaline earth metal compounds such as magnesium hydride, calcium hydride, strontium hydride, barium hydride, magnesium hydroxide, calcium hydroxide, strontium hydroxide, barium hydroxide, magnesium hydrogen carbonate, magnesium acetate, magnesium ethoxide and dimethylmagnesium;
the below-described alkali metal compounds;
and the like. Among these, alkali metal compounds are preferred.

Examples of the alkali metal compounds include:

alkali metal elements such as lithium, sodium, potassium, rubidium and cesium;
alkali metal hydrides such as lithium hydride, sodium hydride, potassium hydride, rubidium hydride and cesium hydride;
alkali metal organometallic compounds such as methyllithium, n-butyllithium, cyclopentadienyl sodium and cyclopentadienyl potassium;
alkali metal hydroxides such as lithium hydroxide, sodium hydroxide, potassium hydroxide, rubidium hydroxide and cesium hydroxide;
alkali metal alkoxides such as lithium ethoxide, sodium ethoxide, potassium ethoxide, rubidium ethoxide, cesium ethoxide, sodium glycoxide and sodium phenoxide;
alkali metal salts such as lithium carbonate, sodium carbonate, potassium carbonate, rubidium carbonate, cesium carbonate, sodium hydrogen carbonate, sodium acetate, sodium glycolate, sodium glutamate and sodium aluminate;
and the like. Among these, alkali metal hydroxides are preferred.

These basic compounds can be used individually or in combination of two or more species. These basic compounds can be also used in combination with other compounds, if necessary, by diluting with a solvent such as water or alcohols, or the like.

The titanium-containing solution according to the invention may be prepared, if necessary, by further using various inorganic compounds and organic compounds, in addition to the above-described compounds. For example, when a known solubility promoter as described above is further added, the effect of promoting in solubilizing titanium may possibly be further improved. Thus, addition thereof is desirable when a solution containing a higher concentration of titanium is needed.

The process for preparing a titanium-containing solution comprising a titanium compound, an aliphatic diol, a polyhydric alcohol having a valency of 3 or greater, and optionally water and/or a basic compound, if necessary, which are raw materials for the titanium-containing solution according to the invention, is not particularly limited. The starting materials, each in the gas phase, liquid phase or solid phase, can be brought into contact with each other simultaneously or separately with a time interval, and then can be either mixed naturally by leaving to stand still or mixed with stirring by a physical means. It is preferable to preliminarily mix aliphatic diol and polyhydric alcohol having a valency of 3 or greater, and then add a titanium compound.

In the preparation of the titanium-containing solution, it is also preferable to add a titanium compound to a solvent containing 50 ppm or more of water. The amount of water contained in the solvent is preferably 100 ppm or more, more preferably 1000 ppm or more, and even more preferably 5000 ppm or more. When the water content in the solvent exceeds the above-described range, homogeneity or stability of the titanium-containing solution can be improved such that precipitation of the insolubles during preparation of the titanium-containing solution can be suppressed, or precipitation of the insolubles during storage of the titanium-containing solution can be suppressed.

This mixing operation can be carried out under reduced pressure, ambient pressure or elevated pressure, and also under an atmosphere of inert gas such as nitrogen or in the air. Furthermore, since highly hygroscopic starting materials may be used, when strict control of the water content is required, it is desirable to carry out the operation under a dry gas atmosphere.

The temperature for mixing each of the starting materials in preparation of the titanium-containing solution according to the invention is typically 200°C or lower, and preferably in the range of room temperature to 70°C.

In the preparation of the titanium-containing solution according to the invention, the preparation process may be finished without any further processing after completion of the above-mentioned mixing operation, but in general a heating operation is carried out.

The temperature for carrying out the heating operation is typically room temperature or higher, and preferably in the range of 60 to 200°C. The low boiling point compounds such as water and alcohols that volatilize from the solution during the heating operation, may be refluxed into the solution using a refluxing means such as a reflux condenser, or may be removed out of the system. The time for carrying out the heating operation is typically from 0.05 to 16 hours, and preferably from 0.1 to 4 hours.

After the preparation, the titanium-containing solution according to the invention may become thicker when the temperature is decreased lower than the preparation temperature, and occasionally, even it may become a vitreous solid. In this case, the solution may be heated to melt, if necessary, in order to be used in various desired applications in the form of a homogeneous solution again.

Preferably, this titanium-containing solution consistently maintains the solution state from the beginning of mixing the starting materials to the end of preparation.

The titanium-containing solution according to the invention is preferably a homogeneous, clear solution. That is, the HAZE value of the solution is preferably 10% or lower, more preferably 5% or lower, and particularly preferably 2% or lower. The HAZE value of the solution can be measured with an apparatus such as, for example, ND-1001 DP (Nippon Denshoku Industries Co., Ltd.). However, the titanium-containing solution according to the invention can be also used, depending on the use, in the form of a heterogeneous solution such as a slurry containing the undissolved titanium component, or a slurry containing the insoluble microparticles such as a pigment.

The titanium-containing solution according to the invention preferably does not contain a gel component. In the case where the titanium-containing solution according to the invention is used as a catalyst for polyester polymerization as described below, when the titanium-containing solution contains a gel component, there may occur inconveniences such as lowering of the polymerization activity, or adverse effect on the performance of the resulting polyester resins.

The titanium-containing solution of the invention preferably contains halogen atoms in an amount of 100 ppm or lower. In the case where the halogen atom content exceeds the above-described range, upon the use of the titanium-containing solution as a catalyst for polyester polycondensation, corrosion of the polyester polycondensation reactor may be increased.

The second embodiment is a titanium-containing solution characterized by that the particle size of the titanium-containing compound in the solution is mainly from 0.4 nm to 5 nm.

The titanium-containing solution of the invention is preferably such that the particle size of the titanium-containing compound in the solution is mainly from 0.4 nm to 2 nm.

The titanium-containing solution of the invention is more preferably such that the particle size of the titanium-containing compound in the solution is mainly form 0.4 nm to 1 nm.

When the particle size of the titanium-containing compound in the titanium-containing solution is less than the above-mentioned range, upon the use of this titanium-containing solution as a catalyst for polyester polymerization, coloration of the resin or generation of side products occurs to a significant extent during polyester polycondensation or during melt molding of the resulting polyester resin, and thus there is a tendency for deterioration of resin performance. The cause for this is not clear, but it is suspected that the small particle size leads to a high proportion of titanium atoms present on the particle surface, and thus to an excessively high activity.

On the other hand, when the particle size exceeds the above-mentioned range, upon the use of this titanium-containing solution as a catalyst for polyester polymerization, the polymerization activity per weight of titanium may be lowered. One of the causes for this is suspected to be deterioration of the diffusibility of particles due to the increase in the particle size.

The particle size of the titanium-containing compound in the titanium-containing solution of the invention is mainly from 0.4 nm to 5 nm, but the titanium-containing solution of the invention may contain a titanium-containing compound having a particle size beyond this range.

In the titanium-containing compound in the titanium-containing solution of the invention, the proportion of the compound having a particle size of from 0.4 nm to 5 nm is preferably 50% or more, and more preferably 80% or more, as a proportion of the titanium-containing compound volume.

The term "particle size being mainly from 0.4 nm to 5 nm" implies that in the titanium-containing compound in the titanium-containing solution of the invention, the proportion of the compound having a particle size of from 0.4 nm to 5 nm is 50% or more as a proportion of the titanium-containing compound volume. It is preferred that the volume proportion of the compound is 80% or more.

More preferably, in the titanium-containing compound in the titanium-containing solution of the invention, the proportion of the compound having a particle size of from 0.4 nm to 2 nm is preferably 50% or more, and more preferably 80% or more, as a proportion of the titanium-containing compound volume.

Even more preferably, in the titanium-containing compound in the titanium-containing solution of the invention, the proportion of the compound having a particle size of from 0.4 nm to 1 nm is preferably 50% or more, and more preferably 70% or more, as a proportion of the titanium-containing compound volume.

The particle size of the titanium-containing compound in the titanium-containing solution can be measured by a technique such as, for example, dynamic laser light scattering, static laser light scattering, small angle X-ray scattering or electron microscopy.

The titanium-containing solution of the invention preferably contains an aliphatic diol as a solvent or as one component of the solvent.

The aliphatic diol which is contained in the titanium-containing solution of the invention may be exemplified by ethylene glycol, propylene glycol, hexylene glycol, octylene glycol, 1,3-propanediol, 1,4-butanediol, 1,5-pentanediol, 1,6-hexanediol, 1,2-cyclohexanediol, 1,3-cyclohexanediol, 1,4-cyclohexanediol, 1,4-cyclohexanedimethanol or the like. Among these, ethylene glycol, 1,3-propanediol, 1,4-butanediol and 1,4-cyclohexanedimethanol are preferred, and ethylene glycol is more preferred. These aliphatic diols may be contained individually or in combination of two or more species.

The content of the aliphatic diol in the titanium-containing solution of the invention is not particularly limited, but it is preferably from 4 to 99% by weight, more preferably from 19 to 94% by weight, and even more preferably from 50 to 85% by weight. The content of the aliphatic diol can be measured by an analysis method such as, for example, gas chromatography. When the content of the aliphatic diol is within the above-described range, upon the use of the titanium-containing solution as a catalyst for polyester polycondensation, the polymerization activity can be improved.

Furthermore, the molar ratio of the aliphatic diol and titanium (ratio of aliphatic diol/titanium atoms) is preferably 10 or greater. When the ratio of aliphatic diol/titanium atoms is less than 10, the storage stability of the titanium-containing solution may be deteriorated.

The titanium-containing solution of the invention contains polyhydric alcohol having a valency of 3 or greater.

The polyhydric alcohol having a valency of 3 or greater that is contained in the titanium-containing solution of the invention, may be exemplified by glycerol, trimethylolpropane, erythritol, pentaerythritol, sorbitol, glucose, fructose, pullulan, cyclodextrin or the like. Among these, glycerol and trimethylolpropane are preferred, and glycerol is more preferred. These polyhydric alcohols having a valency of 3 or greater may be contained individually or in combination of two or more species.

The content of the polyhydric alcohol having a valency of 3 or greater in the titanium-containing solution of the invention, is from 0.1 to 95% by weight, more preferably from 5 to 80% by weight, and even more preferably from 15 to 50% by weight. The content of the polyhydric alcohol having a valency of 3 or greater can be measured by an analysis method such as, for example, gas chromatography. When the content of the polyhydric alcohol having a valency of 3 or greater is within the above-mentioned range, upon the use of the titanium-containing solution as a catalyst for polyester polycondensation, the polymerization activity can be improved.

The titanium-containing solution of the invention may contain a basic compound and/or water.

The basic compound contained in the titanium-containing solution of the invention refers to a compound which generates a proton acceptor (Brönsted base) or an electron donor (Lewis base) in the aliphatic diol solvent.

Examples of the basic compound include:

amine compounds such as ammonia, trimethylamine, triethylamine, pyrrolidine, morpholine, 1,4,7-triazacyclononane, aminoethanol, aniline and pyridine;

quaternary ammonium compounds such as tetramethylammonium hydroxide and tetraethylammonium hydroxide;

quaternary phosphonium compounds such as tetramethylphosphonium hydroxide and tetraethylphosphonium hydroxide;

alkaline earth metal compounds such as magnesium hydride, calcium hydride, strontium hydride, barium hydride, magnesium hydroxide, calcium hydroxide, strontium hydroxide, barium hydroxide, magnesium hydrogen carbonate, magnesium acetate, magnesium ethoxide and dimethylmagnesium;

the below-described alkali metal compounds;

and the like. Among these, alkali metal compounds are preferred.

Examples of the alkali metal compounds include:

alkali metal elements such as lithium, sodium, potassium, rubidium and cesium;

alkali metal hydrides such as lithium hydride, sodium hydride, potassium hydride, rubidium hydride and cesium hydride;

alkali metal organometallic compounds such as methyllithium, n-butyllithium, cyclopentadienyl sodium and cyclopentadienyl potassium;

alkali metal hydroxides such as lithium hydroxide, sodium hydroxide, potassium hydroxide, rubidium hydroxide and cesium hydroxide;

alkali metal alkoxides such as lithium ethoxide, sodium ethoxide, potassium ethoxide, rubidium ethoxide, cesium ethoxide, sodium glycoxide and sodium phenoxide;

alkali metal salts such as lithium carbonate, sodium carbonate, potassium carbonate, rubidium carbonate, cesium carbonate, sodium hydrogen carbonate, sodium acetate, sodium glycolate, sodium glutamate and sodium aluminate;

and the like. Among these, alkali metal hydroxides are preferred.

These basic compounds may be contained individually or in combination of two or more species.

The content of water in the titanium-containing solution of the invention is not particularly limited, but it is preferably 50% by weight or less, more preferably 50 ppm to 30% by weight, and even more preferably 100 ppm to 10% by weight. When the water content is within the above-mentioned range, upon the use of the titanium-containing solution as a catalyst for polyester polycondensation, the polymerization activity can be improved.

The content of the basic compound in the titanium-containing solution of the invention is not particularly limited, but it is preferably 50% by weight or less, more preferably 50 ppm to 30% by weight, and even more preferably 100 ppm to 10% by weight. When the amount of the basic compound added is within the above-mentioned range, upon the use of the titanium-containing solution as a catalyst for polyester polycondensation, the polymerization activity can be improved.

The particle of the titanium-containing compound contained in the titanium-containing solution of the invention is preferably substantially amorphous.

When the titanium-containing compound particle is crystalline, upon the use of the titanium-containing solution as a catalyst for polyester polycondensation, the polymerization activity may be lowered.

Whether the titanium-containing compound particle is substantially amorphous can be confirmed, as clear diffraction peaks are not observed in X-ray diffraction, or as clear crystal lattices are not visible in an observation with transmission electron microscope.

The titanium-containing solution of the invention preferably contains titanium in an amount of not less than 0.5% by weight, and more preferably not less than 1% by weight, in terms of titanium atoms.

When the titanium content is less than the above-mentioned range, upon the use of the titanium-containing solution as a catalyst for polyester polycondensation, the proportion of components other than the titanium catalyst component added to the polyester polycondensation reaction system may become larger, thus the polycondensation reaction being adversely affected.

The titanium-containing solution of the invention preferably contains halogen atoms in an amount of not more than 100 ppm. When the halogen atom content exceeds the above-mentioned range, upon the use of the titanium-containing solution as a catalyst for polyester polycondensation, corrosion of the polyester polycondensation reactor may be increased.

The process for preparing the titanium-containing solution of the invention is not particularly limited, but the solution is obtained by, for example, a process for preparing a titanium-containing solution using a titanium compound, an aliphatic diol, a polyhydric alcohol having a valency of 3 or greater, and optionally water and/or a basic compound.

Specifically, the starting materials, each in the gas phase, liquid phase or solid phase, may be brought to contact with each other simultaneously or separately with a time interval, and then either naturally mixed by leaving to stand still or mixed under stirring by a physical means. It is preferable to preliminarily mix the aliphatic diol and the polyhydric alcohol having a valency of 3 or greater, and then to add the titanium compound.

In preparation of the titanium-containing solution, it is preferable to add the titanium compound to a solvent containing 50 ppm or more of water. The content of water contained in the solvent is preferably 100 ppm or more, more preferably 1000 ppm or more, and even more preferably 5000 ppm or more. When the water content in the solvent exceeds the above-mentioned range, upon preparation of the titanium-containing solution, homogeneity or stability of the titanium-containing solution can be improved such that precipitation of the insolubles during preparation of the titanium-containing solution can be suppressed, or precipitation of the insolubles during storage of the titanium-containing solution can be suppressed.

This mixing operation can be carried out under reduced pressure, ambient pressure or elevated pressure, and also under an atmosphere of inert gas such as nitrogen or in the air. Further, since highly hygroscopic materials may be used, when strict control of the water content is required, it is desirable to carry out the operation under a dry gas atmosphere.

The temperature for mixing the starting materials in preparation of the titanium-containing solution is typically 200°C or lower, and preferably in the range of room temperature to 70°C.

In the preparation of the titanium-containing solution, the preparation process may be finished without any further processing after completion of the above-mentioned mixing operation, but in general a heating operation is carried out.

The temperature for carrying out the heating operation is typically room temperature or above, and preferably in the range of 60 to 200°C. The low boiling point compounds such as water and alcohols that volatilize from the solution during the heating operation, may be refluxed into the solution using a refluxing means such as reflux condenser, or may be removed out of the system. The time for carrying out the heating operation is typically from 0.05 to 16 hours, and preferably from 0.1 to 4 hours.

After preparation, this titanium-containing solution becomes thick when the temperature is decreased lower than the preparation temperature, and occasionally, even becomes a gel or vitreous solid. In this case, the solution may be heated to melt, if necessary, in order to be used in various desired applications in the form of a homogeneous solution again.

Preferably, this titanium-containing solution consistently maintains the solution state from the beginning of mixing the starting materials to the end of preparation.

This titanium-containing solution is preferably a homogeneous, clear solution. That is, the HAZE value of the solution is preferably 10% or lower, more preferably 5% or lower, and particularly preferably 2% or lower. The HAZE value of the solution can be measured with an apparatus such as, for example, ND-1001 DP (Nippon Denshoku Industries Co., Ltd.). However, the titanium-containing solution can be also used, depending on the use, in the form of a heterogeneous solution such as a slurry containing undissolved titanium component, or a slurry containing insoluble microparticles such as pigment.

The titanium-containing solution according to the invention preferably does not contain a gel component. In the case where the titanium-containing solution according to the invention is used as a catalyst for polyester polymerization described below, when the titanium-containing solution contains a gel component, there may occur inconveniences such as lowering of the polymerization activity, or adverse effect on the performance of the resulting polyester resins.

Examples of the titanium compound used in preparation of the titanium-containing solution of the invention include:

halogenated titanium compounds such as titanium tetrafluoride, titanium tetrachloride, titanium tetrabromide, titanium tetraiodide and hexafluorotitanic acid;

titanic acid compounds such as $\alpha$-titanic acid, $\beta$-titanic acid, ammonium titanate and sodium titanate;

titanium inorganic acid salt compounds such as titanium sulfate and titanium nitrate;

titanium-containing organometallic compounds such as tetramethyltitanium, tetraethyltitanium, tetrabenzyltitanium, tetraphenyltitanium and bis(cyclopentadienyl)titanium dichloride;

aryloxytitanium compounds such as tetraphenoxytitanium;

siloxytitanium compounds such as tetrakis(trimethylsiloxy)titanium and tetrakis(triphenylsiloxy)titanium;

titanium organic acid salt compounds such as titanium acetate, titanium propionate, titanium lactate, titanium citrate and titanium tartrate;

titanium amide compounds such as tetrakis(diethylamino)titanium and titanium tetrapyrrolide;

the below-described alkoxytitanium compounds;

and the like. Among these, alkoxytitanium compounds are preferred.

Examples of the alkoxytitanium compound include:

titanium tetraalkoxides such as titanium tetramethoxide, titanium tetraethoxide, titanium tetra-n-propoxide, titanium tetraisopropoxide, titanium tetra-n-butoxide and titanium tetra-2-ethylhexoxide;
condensed titanium alkoxides such as poly(dibutyl titanate), $Ti_7O_4(OC_2H_5)_{20}$ and $Ti_{16}O_{16}(OC_2H_5)_{32}$;
halogen-substituted titanium alkoxides such as chlorotitanium triisopropoxide and dichlorotitanium diethoxide;
carboxylic acid-substituted titanium alkoxides such as titanium acetate triisopropoxide and titanium methacrylate triisopropoxide;
phosphonic acid-substituted titanium alkoxides such as titanium tris(dioctylpyrophosphate)isopropoxide;
sulfonic acid-substituted titanium alkoxides such as titanium tris(dodecylbenzenesulfonate)isopropoxide;
alkoxytitanates such as ammonium hexaethoxytitanate, sodium hexaethoxytitanate, potassium hexaethoxytitanate and sodium hexa-n-propoxytitanate;
β-diketonate-substituted titanium alkoxides such as titanium bis(2,4-pentanedionate)diisopropoxide and titanium bis(ethylacetoacetate)diisopropoxide;
α-hydroxycarboxylic acid-substituted titanium alkoxides such as titanium bis(ammonium lactate)diisopropoxide;
aminoalcohol-substituted titanium alkoxides such as titanium bis(triethanolamine)diisopropoxide and 2-aminoethoxytitanium triisopropoxide;
and the like. Among these, titanium tetraalkoxides are preferred.

These titanium compounds can be used individually or in combination of two or more species. These titanium compounds can be also used in combination with other compounds, as desired, by diluting with a solvent such as alcohols, or the like.

[Catalyst for polyester preparation]

The catalyst for polyester preparation of the invention is characterized by comprising the titanium-containing solution of the invention.
The process for preparation of a polyester resin of the invention is characterized by polycondensing an aromatic dicarboxylic acid or an ester-forming derivative thereof with an aliphatic diol or an ester-forming derivative thereof in the presence of the titanium-containing solution of the invention.
Here, examples of the aromatic dicarboxylic acid include terephthalic acid, phthalic acid, isophthalic acid, naphthalenedicarboxylic acid, diphenyldicarboxylic acid, diphenoxyethanedicarboxylic acid and the like.
Further, examples of the aliphatic diol include ethylene glycol, trimethylene glycol, propylene glycol, tetramethylene glycol, neopentyl glycol, hexamethylene glycol, 1,4-cyclohexanedimethanol and the like.
According to the invention, in addition to the aromatic dicarboxylic acids, aliphatic dicarboxylic acids such as adipic acid, sebacic acid, azelaic acid and decanedicarboxylic acid, alicyclic dicarboxylic acids such as cyclohexanedicarboxylic acid, and the like can be also used as starting materials. Further, in addition to the aliphatic diols, alicyclic glycols such as cyclohexanedimethanol, aromatic diols such as bisphenol, hydroquinone and 2,2-bis(4-β-hydroxyethoxyphenyl)propanes, and the like can be also used as starting material.
According to the invention, polyfunctional compounds such as trimesic acid, trimethylolethane, trimethylolpropane, trimethylolmethane, and pentaerythritol can be also used as starting material.
In the process for preparation of a polyester resin of the invention, the amount of the titanium-containing solution added is preferably from 1 to 100 ppm, and more preferably from 1 to 50 ppm, in terms of titanium atoms.
In the process for preparation of a polyester resin of the invention, the above-described basic compounds can be used, if necessary, in addition to the above-described titanium-containing solution.
The amount of the above-described basic compound added is such that the content of alkali metal, alkaline earth metal and nitrogen is preferably 1 ppm or more, more preferably 1 to 500 ppm, and even more preferably 2 to 200 ppm, as the total amount of the alkali metal atoms, alkaline earth metal atoms and nitrogen atoms.
When the content of alkali metal, alkaline earth metal and nitrogen is within the above-mentioned range, the resin quality such as the color tone of the resulting polyester resin or the acetaldehyde content can be improved.
In the process for preparation of a polyester resin of the invention, phosphorus compounds may be used, if necessary, in addition to the above-described titanium-containing solution.
Examples of the phosphorus compound used in the process for preparation of a polyester resin of the invention include:

phosphoric acid esters such as trimethyl phosphate, triethyl phosphate, tri-n-butyl phosphate, trioctyl phosphate and triphenyl phosphate;
phosphorous acid esters such as triphenyl phosphite, trisdodecyl phosphite and trisnonylphenyl phosphite;

acidic phosphoric acid esters such as methyl acid phosphate, ethyl acid phosphate, isopropyl acid phosphate, butyl acid phosphate, dibutyl phosphate, monobutyl phosphate and dioctyl phosphate;

organic phosphonic acids such as methylphosphonic acid and phenylphosphonic acid, and esters thereof;

phosphorus compounds such as phosphoric acid, pyrophosphoric acid and polyphosphoric acid, and salts thereof; and the like.

Among these, tri-n-butyl phosphate, methyl acid phosphate, ethyl acid phosphate, phenylphosphonic acid, phosphoric acid, pyrophosphoric acid and the like are preferred.

The amount of these phosphorus compounds added is typically 1 to 300 ppm in terms of phosphorus atoms, with respect to the obtained polyester resin.

These phosphorus compounds can be used individually or in combination of two or more species. These phosphorus compounds can be also used in combination with other compounds, if necessary, by diluting with a solvent such as water or alcohols.

According to the process for preparation of a polyester resin of the invention, sulfur compounds can be used, as desired. When sulfur compounds are used, the polyester resin productivity can be improved, and at the same time, the resin quality such as the color tone can be improved.

Examples of the above-described sulfur compound used upon necessary include:

sulfur elements;

sulfide compounds such as ammonium sulfide and sodium sulfide;

sulfinic acid compounds such as sulfurous acid, ammonium sulfite and sodium hydrogen sulfite;

sulfonic acid compounds such as sulfuric acid, sodium hydrogen sulfate, methanesulfonic acid and p-toluenesulfonic acid;

other inorganic sulfur compounds such as sulfur trioxide, persulfuric acid, sodium thiosulfate and sodium dithionite; and the like.

Among these, sulfuric acid, p-toluenesulfonic acid and the like are preferred.

The above-described sulfur compounds can be used individually or in combination of two or more species. Furthermore, these compounds can be used in combination with other compounds, if necessary, by diluting with a solvent such as water or alcohols.

In the process for preparation of a polyester resin of the invention, other compounds also can be used, as desired.

The above-described other compounds used upon necessary include compounds of at least one element selected from the group consisting of boron, aluminum, gallium, manganese, iron, cobalt, zinc, zirconium, nickel, copper, silicon and tin.

Examples of the compounds of at least one element selected from the group consisting of boron, aluminum, gallium, manganese, iron, cobalt, zinc, zirconium, nickel, copper, silicon and tin, include aliphatic acid salts such as acetates of these elements, carbonates, sulfates and nitrates of these elements, halides such as chlorides of these elements, acetylacetonates of these elements, oxides of these elements, and the like, but acetates or carbonates are preferred.

Specific preferred compounds of the other compounds used upon necessity in the invention can be exemplified by the following:

boron compounds such as boron oxide, boron bromide and boron fluoride, particularly boron oxide being preferred;

aluminum compounds such as aluminum acetate, sodium aluminate, aluminum acetylacetonate and aluminum tri-sec-butoxide, particularly sodium aluminate being preferred;

gallium compounds such as gallium chloride, gallium nitrate and gallium oxide, particularly gallium oxide being preferred;

manganese compounds such as manganese aliphatic acid salts such as manganese acetate, manganese carbonate, manganese chloride and manganese acetylacetonate, particularly manganese acetate or manganese carbonate being preferred;

iron compounds such as iron(II) chloride, iron(III) chloride, iron(II) lactate, iron(III) nitrate, iron(II) naphthenate, iron (II) oxalate, iron(III) oxide, iron(II) sulfate, iron(III) sulfate, iron(III) tripotassium oxalate, iron(III) acetylacetonate, iron (III) fumarate and triiron tetraoxide, particularly iron(III) acetylacetonate being preferred;

cobalt compounds such as cobalt aliphatic acid salts such as cobalt acetate, cobalt carbonate, cobalt chloride and cobalt acetylacetonate, particularly cobalt acetate or cobalt carbonate being preferred;

zinc compounds such as zinc aliphatic acid salts such as zinc acetate, zinc carbonate, zinc chloride and zinc acetylacetonate, particularly zinc acetate or zinc carbonate being preferred;

zirconium compounds such as zirconium acetylacetonate, zirconium butoxide, zirconium carbonate, zirconium chloride, zirconium naphthenate, zirconium oxide, zirconium sulfate and zirconium nitrate, particularly zirconium butoxide being preferred;

nickel compounds such as nickel sulfate, nickel carbonate, nickel nitrate, nickel chloride, nickel acetate, nickel acetylacetonate, nickel formate, nickel hydroxide, nickel sulfide and nickel stearate, particularly nickel acetate being preferred;

copper compounds such as copper acetate, copper bromide, copper carbonate, copper chloride, copper citrate, 2-ethylhexane copper, copper fluoride, copper formate, copper gluconate, copper hydroxide, copper methoxide, copper naphthenate, copper nitrate, copper oxide, copper phthalate and copper sulfide, particularly copper acetate being preferred;

silicon compounds such as tetramethoxysilane, tetraethoxysilane, tetrapropoxysilane and tetrabutoxysilane, particularly tetraethoxysilane being preferred; and

tin compounds such as tin acetate, tin chloride, tin oxide, tin oxalate and tin sulfate, particularly tin acetate being preferred.

These other compounds can be used individually or in combination of two or more species.

Antimony compounds and germanium compounds can be also used, but it is preferable not to use antimony compounds and germanium compounds.

The amount of metal contained in the polyester resin obtained by the process for preparation of a polyester resin of the invention is not limited, but it is preferably less than 40 ppm, and more preferably 30 ppm or less, as the total amount of metal atoms. When the metal content exceeds the above-mentioned range, the burden of facilities in waste treatment or material recycling of the polyester resin after use may increase.

In particular, the content of heavy metals is preferably not more than 10 ppm, and more preferably not more than 4 ppm.

Here, the heavy metals refer to radium, the elements of Group 3 excluding scandium and yttrium, the elements of Group 4 excluding titanium, all of the elements of Groups 5 to 12, the elements of Group 13 excluding boron and aluminum, the elements of Group 14 excluding carbon and silicon, the elements of Group 15 excluding nitrogen, phosphorus and arsenic, and the elements of Group 16 excluding oxygen, sulfur and selenium, as classified by Kenzaburo Tsuchiya in "Metal Toxicology", Ishiyaku Publishers, Inc. (1983).

The polyester resin obtained by the process for preparation of a polyester resin of the invention is such that the amount of acetaldehyde $[AA]_0$ contained in the polyester resin is preferably 4 ppm or less, more preferably 3 ppm or less, and even more preferably 2 ppm or less. When $[AA]_0$ is beyond the above-mentioned range, the content of the container formed from the resulting polyester may be adversely affected in taste or odor.

With regard to the polyester resin obtained by the process for preparation of a polyester resin of the invention, the difference ($\Delta AA$) between the amount of acetaldehyde contained in the molded product obtained by molding the polyester by a predetermined method using an injection molding machine, $[AA]_1$, and the amount of acetaldehyde contained in the polyester resin before molding, $[AA]_0$, is preferably 15 ppm or less, and more preferably 10 ppm or less. When $\Delta AA$ is beyond the above-mentioned range, the content of the container formed from the resulting polyester may be adversely affected in taste or odor.

The polyester resin obtained by the process for preparation of a polyester resin of the invention is such that the amount of cyclic trimers ($[CT]_0$) contained in the polyester is 0.50% by weight or less, and more preferably 0.40% by weight or less. When $[CT]_0$ is beyond the above-mentioned range, mold fouling is liable to occur during the molding of a blow molded product or the like.

With regard to the polyester resin obtained by the process for preparation of a polyester resin of the invention, the difference ($\Delta CT$) between the amount of cyclic trimers contained in the molded product obtained by molding the polyester by a predetermined method using an injection molding machine, $[CT]_1$, and the amount of cyclic trimers contained in the polyester resin before molding, $[CT]_0$, is preferably 0.1% by weight or less, and more preferably 0.05% by weight or less. When $\Delta CT$ is beyond the above-mentioned range, mold fouling is liable to occur during the molding of a blow molded product or the like.

Here, the method for obtaining a molded product by molding polyester resin using an injection molding machine and the method for measuring the content of cyclic trimer are as follows.

During the molding process, the molding temperature is 290 $\pm$ 10°C, and duration of the molding cycle is about 65 $\pm$ 10 seconds.

More specifically, 2 kg of a particulate polyester resin is dried in a tray-type dryer at a temperature of 140°C and a pressure of 10 Torr for 16 hours or longer, to decrease the moisture content in the particulate polyester resin to not more than 50 ppm.

Next, the dried particulate polyester resin is extruded in an M-70B injection molding machine (Meiki Co., Ltd.) at a mold cooling temperature of 15°C, while feeding nitrogen, whose dew point is -70°C, to the upper part of a hopper and to the screw feeder chute, at a rate of 5 $Nm^2$/hr, respectively, and setting the barrel temperature at 290°C and the

temperatures of $C_1/C_2/C_3$/nozzle tip of the molding machine at 260°C/290°C/290°C/300°C, respectively, during the process of molding, to obtain a stepped rectangular plate-like molded product.

Injection molding of a stepped rectangular plate-like molded product is carried out such that metering takes about 15 seconds or so and injection takes 3 seconds or so, and the dried particulate polyester resin is fed from the hopper to the injection molding machine. Duration of the molding cycle is 65 seconds or so. The weight of one stepped rectangular plate-like molded product is 72 grams, and measurement of the amount of cyclic trimers is carried out such that any one among the 11th to 15th products is taken as the sample for measurement after beginning of the injection molding process.

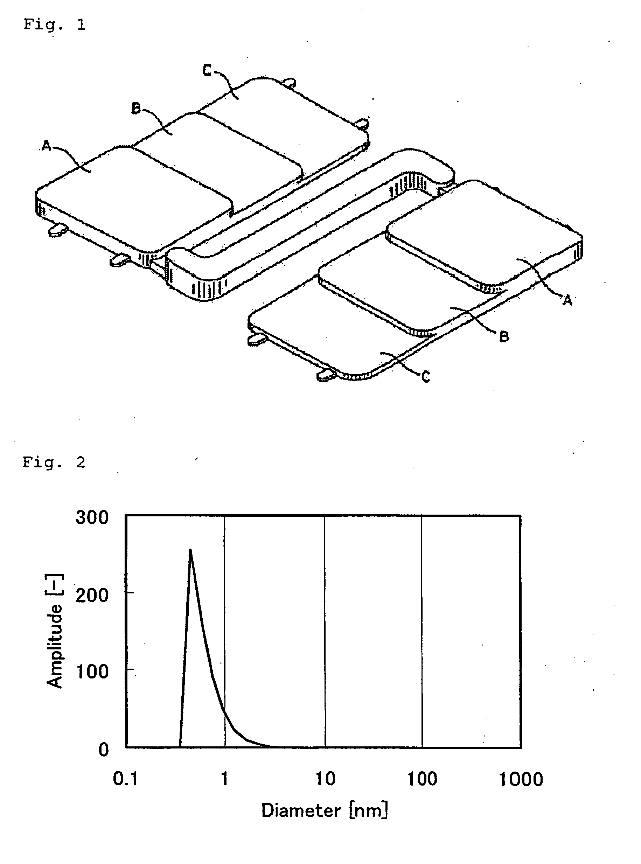

The stepped rectangular plate-like molded product has a shape as illustrated in Fig. 1, and has 6 levels of thickness from 2 mm to 7 mm with a step-to-step thickness difference of 1 mm. The 4-mm part of this stepped rectangular plate-like molded product is cut out, cut in a chip-like form and used as the sample for measuring the amount of cyclic trimer.

A predetermined amount of the sample for measuring the amount of cyclic trimers is heated to melt in o-chlorophenol, subsequently re-precipitated by tetrahydrofuran, and filtered to remove linear polyester. The obtained filtrate is supplied to liquid chromatography (LC7A by Shimadzu Corp.) to determine the amount of cyclic trimers contained in the polyester resin. This value is divided by the amount of the polyester resin used in the measurement and taken as the content (% by weight) of the cyclic trimer contained in the polyester resin.

The polyester resin obtained by the process for preparation of a polyester resin of the invention is such that color b-value is preferably 10 or less, more preferably 5 or less, and even more preferably 3 or less. When the color b-value of the polyester resin is beyond the above-mentioned range, the blow molded product such as a bottle tends to have a strong tinge of yellow.

Furthermore, with regard to the polyester resin obtained by the process for preparation of a polyester resin of the invention, the difference (Δb) between the color b-value of the molded product obtained by molding the polyester by a predetermined method using an injection molding machine and the color b-value of the polyester resin before molding is preferably 10 or less, more preferably 8 or less, and even more preferably 6 or less. When Δb is beyond the above-mentioned range, the blow molded product such as a bottle tends to have at strong tinge of yellow.

The polyester resin of the invention is such that color L-value is preferably 75 or more, more preferably 80 or more, and even more preferably 85 or more. When the color L-value of the polyester resin is beyond the above-mentioned range, the blow molded product such as a bottle tends to have a dark tone.

The color L-value is measured after heating and crystallizing the polyester resin, using a 45° diffusion type colorimeter (SQ-300H by Nippon Denshoku Industries Co., Ltd.) or the like.

[Process for preparation of polyester resin]

The process for preparation of a polyester resin of the invention prepares a polyester resin by polycondensing an aromatic dicarboxylic acid or an ester-forming derivative thereof with an aliphatic diol or an ester-forming derivative thereof. Hereinafter, an example of the process will be described.

(Esterification step)

First, in the preparation of a polyester resin, an aromatic dicarboxylic acid or an ester-forming derivative thereof and an aliphatic diol or an ester-forming derivative thereof are subjected to esterification.

Specifically, a slurry containing an aromatic dicarboxylic acid or an ester-forming derivative thereof, and an aliphatic diol or an ester-forming derivative thereof is produced.

This slurry contains typically 1.005 to 1.5 moles, and preferably 1.01 to 1.2 moles, of an aliphatic diol or an ester-forming derivative thereof, with respect to 1 mole of an aromatic dicarboxylic acid or an ester-forming derivative thereof. This slurry is continuously supplied to the esterification step.

The esterification reaction is preferably carried out in an apparatus having two or more esterification reactors connected in series, by removing the water produced in the reaction out of the system from the distillation tower, under the condition that the aliphatic diol is refluxed.

The esterification step is typically carried out in multiple stages, and the esterification reaction at the first stage is usually carried out at a reaction temperature of 240 to 270° C, and preferably 245 to 265°C, and at a pressure of 0.02 to 0.3 MPaG (0.2 to 3 kg/cm$^2$G), and preferably 0.05 to 0.2 MPaG (0.5 to 2 kg/cm$^2$G), while the esterification reaction at the last stage is usually carried out at a reaction temperature of 250 to 280°C, and preferably 255 to 275°C, and at a pressure of 0 to 0.15 MPaG (0 to 1.5 kg/cm$^2$G), and preferably 0 to 0.13 MPaG (0 to 1.3 kg/cm$^2$G).

When the esterification reaction is conducted in two stages, the esterification conditions for the first stage and the second stage respectively fall within the above-described ranges, and when the reaction is conducted in three or more stages, the esterification conditions for the second stage to the stage before the last stage may be any condition between the reaction conditions for the first stage and the reaction conditions of the last stage as described above.

For example, When the esterification reaction is carried out in three stages, the reaction temperature for the esterification reaction at the second stage is usually 245 to 275°C, and preferably 250 to 270°C, and the pressure at the same stage is usually 0 to 0.2 MPaG (0 to 2 kg/cm$^2$G), and preferably 0.02 to 0.15 MPaG (0.2 to 1.5 kg/cm$^2$G).

The esterification reaction rate in each of these stages is not particularly limited, but it is desirable that the degree of increase of the esterification reaction rate in each stage is evenly distributed. Further, the reaction rate for the esterification product of the last stage preferably reaches 90% or higher, and more preferably 93% or higher.

This esterification step results in a lower condensate (ester oligomer), which is the esterification product of the aromatic dicarboxylic acid and the aliphatic diol, and the number average molecular weight of the lower condensate is about 500 to 5,000.

The lower condensate obtained from the esterification step as described above is subsequently supplied to a polycondensation (liquid phase polycondensation) step.

(Liquid phase polycondensation step)

In the liquid phase polycondensation step, the lower condensate obtained from the esterification step is subjected to polycondensation by heating under reduced pressure and also to a temperature above the melting point of the polyester resin (typically 250 to 280°C). This polycondensation reaction is preferably carried out while removing unreacted aliphatic diol out of the reaction system by distillation.

The polycondensation reaction may be conducted in a single stage or in multiple stages. For example, when the polycondensation reaction is carried out in multiple stages, the polycondensation reaction at the first stage is conducted at a reaction temperature of 250 to 290°C, and preferably 260 to 280°C, and at pressure of 0.07 to 0.003 MPaG (500 to 20 Torr), and preferably 0.03 to 0.004 MPaG (200 to 30 Torr), while the polycondensation reaction at the last stage is conducted at a reaction temperature of 265 to 300°C, and preferably 270 to 295°C, and at a pressure of 1 to 0.01 kPaG (10 to 0.1 Torr), and preferably 0.7 to 0.07 kPaG (5 to 0.5 Torr).

When the polycondensation reaction is carried out in three or more stages, the polycondensation reaction in the second stage to the stage before the last stage is conducted under any condition between the reaction conditions for the first stage and the reaction conditions of the last stage as described above. For example, when the polycondensation reaction is carried out in three stages, the reaction temperature for the polycondensation reaction at the second stage is usually 260 to 295°C, preferably 270 to 285°C, and the pressure at the same stage is usually 7 to 0.3 kPaG (50 to 2 Torr), and preferably 5 to 0.7 KPaG (40 to 5 Torr).

As the catalyst, the titanium-containing solution, and optionally a basic compound, a phosphorus compound and other compounds may be present in the polycondensation reaction. For this reason, addition of these compounds may be carried out at any of the starting slurry preparation step, the esterification step, the liquid phase polycondensation step and the like. Also, the entire amount of the catalyst may be added in a single time or in plural times.

The intrinsic viscosity [IV] of the liquid phase polycondensed polyester resin obtained from the liquid phase polycondensation step as describe above, is preferably 0.40 to 1.0 dl/g, and more preferably 0.50 to 0.90 dl/g. Also, the intrinsic viscosity achieved in each stage except the last stage of this liquid phase polycondensation step is not particularly limited, but it is desirable that the degree of increase of the intrinsic viscosity at each stage is evenly distributed.

The liquid phase polycondensed polyester resin obtained from this polycondensation step is usually molded to a particulate shape (chip shape) by melt extrusion.

The COOH group concentration of the liquid phase polycondensed polyester resin obtained from this liquid phase polycondensation step is preferably 60 equivalents/ton or less, more preferably 55 to 10 equivalents/ton, and even more preferably 50 to 15 equivalents/ton. When the COOH group concentration in the liquid phase polycondensed polyester resin is within the above-mentioned range, transparency of the polyester resin after solid phase polymerization is increased.

In the liquid phase polycondensation step, the COOH group concentration in the liquid phase polycondensed polyester resin can be achieved at 60 equivalents/ton or less, for example, by setting the molar ratio of the aliphatic diol and the aromatic dicarboxylic acid to 0.98 to 1.3, and preferably 1.0 to 1.2, when the liquid phase polymerization temperature is set at 275 to 295°C.

(Solid phase polycondensation step)

The polyester resin obtained from this liquid phase polycondensation step can be further subjected to solid phase polycondensation, as desired.

The particulate polyester resin supplied to the solid phase polycondensation step may be subjected to precrystallization by preliminarily heating at a temperature lower than the temperature for the case where solid phase polycondensation is carried out, and then supplied to the solid phase polycondensation step.

This precrystallization step can be carried out by heating the particulate polyester resin in a dry state, typically at a temperature of 120 to 200°C, preferably 130 to 180°C for 1 minute to 4 hours. This precrystallization can be also carried out under an atmosphere of steam, an atmosphere of inert gas containing steam or an atmosphere of air containing steam, at a temperature of 120 to 200°C for 1 minute or longer.

The precrystallized polyester resin preferably has a degree of crystallinity of 20 to 50%.

However, this precrystallization treatment does not lead to the so-called solid phase polycondensation of a polyester resin. The intrinsic viscosity of the precrystallized polyester resin is almost the same as the intrinsic viscosity of the polyester resin after liquid phase polycondensation, and the difference between the intrinsic viscosity of the precrystallized polyester resin and the intrinsic viscosity of the polyester resin before precrystallization is usually not more than 0.06 dl/g.

The solid polycondensation step consists of at least one stage and is carried out at a temperature of 190 to 230°C, preferably 195 to 225°C, and at a pressure of 120 to 0.001 kPa, preferably 98 to 0.01 kPa, under an atmosphere of inert gas such as nitrogen, argon or carbon dioxide. The inert gas to be used is preferably nitrogen gas.

The flow rate of the inert gas in a batch system is 0.1 to 50 $Nm^3$/hr with respect to 1 kg of the polyester resin, and the flow rate in a continuous system is 0.01 to 2 $Nm^3$/hr with respect to 1 kg of the polyester resin.

For the inert gas used for the solid phase polymerization atmosphere, a pure inert gas may be constantly used, or an inert gas exhausted from the solid phase polymerization step may be recycled. The inert gas exhausted from the solid phase polymerization step contains condensates and degradants such as water, ethylene glycol and acetaldehyde. Upon recycling, the gas may be an inert gas containing condensates and degradants, or a purified inert gas from which condensates and degradants have been removed.

The particulate polyester resin obtained from this solid phase polycondensation step may be hydrotreated by, for example, the method described in JP-B No. 7-64920, and this hydrotreatment is carried out by bringing the particulate polyester resin to contact with water, steam, a steam-containing inert gas, steam-containing air or the like.

Typically, the intrinsic viscosity of thus obtained polyester resin is preferably 0.70 dl/g or higher, and more preferably 0.75 to 1.0 dl/g.

The COOH group concentration of thus obtained polyester resin is preferably 10 to 35 equivalents/ton, and more preferably 12 to 30 equivalents/ton.

The HAZE value for the stepped rectangular plate-like molded product having a thickness of 5 mm, that is obtained by molding thus obtained polyester resin at 275°C, is preferably 20% or less, and more preferably 15% or less.

The HAZE value for the stepped rectangular plate-like molded product having a thickness of 4 mm, that is obtained by molding thus obtained polyester resin at 275°C, is preferably 3% or less, and more preferably 2% or less.

The process for preparation of a polyester resin including the esterification step and the polycondensation step as described above can be carried out in a batch mode, a semi-continuous mode or a continuous mode.

This polyester resin has particularly excellent color and excellent transparency, and thus it is particularly desirable to use the resin for the manufacture of bottles.

Thus prepared polyester resin may contain conventional known additives such as, for example, a stabilizer, a mold-releasing agent, an antistatic agent, a dispersant, a nucleating agent and a colorant such as dyes and pigments. These additives may be added at any stage during the preparation of the polyester resin, or may be added to the masterbatch before the processing by molding.

Accordingly, the additives may be contained inside the particles of the particulate polyester resin at a uniform concentration, may be contained in the vicinity of the particle surface of the particulate polyester resin in a concentrated state, or may be contained in a portion of the particles of the particulate polyester resin at a concentration higher than that of other particles.

The polyester resin obtained by the invention can be used as a material for various molded products, and are used in, for example, blow molded products such as bottles, sheets, films, fibers and the like by melt molding, while it being preferred to use the resin in the manufacture of bottles.

For the method for molding the polyester resin obtained by the invention into bottles, sheets, films, fibers and the like, any conventionally known method can be employed.

For example, in the case of molding into bottles, mention may be made of a method for preparing a blow molded product in which the polyester resin is extruded from a die in a molten state to form a tubular parison, and then the parison is placed in a mold of desired shape and is fitted to the mold by air blowing; a method for preparing a blow molded product in which a preform is produced from the polyester resin by injection molding, this preform is heated to an appropriate temperature for drawing, and then the preform is placed in a mold of desired shape and is fitted to the mold by air blowing; and the like.

Examples

Hereinafter, the invention will be described with reference to Examples; however, the invention is not intended to be limited by these Examples.

Furthermore, according to the invention, the intrinsic viscosity of a polyester resin was calculated from the viscosity of a solution, which was measured at 25°C after dissolving under heating 0.1 g of the polyester resin in 20 cc of a tetrachloroethane/phenol liquid mixture (mixing ratio: 1/1 (weight ratio)) and then cooling the liquid mixture.

In addition, according to the invention, the particle size of the titanium compound in a titanium-containing solution was measured at 90°C using a dynamic laser light scattering type particle size measuring apparatus (MALVERN HPPS manufactured by Malvern Instruments, Ltd.).

In the Examples of the invention, the ethylene glycol used in preparation of the titanium-containing solution was of a special grade chemical (moisture content: 200 ppm), unless particularly mentioned otherwise.

Example 1

The entire operation was carried out under a dry nitrogen atmosphere. In a 200-ml glass flask equipped with a reflux condenser, 99.00 g of an ethylene glycol/glycerol liquid mixture (mixing ratio: 85/15 (weight ratio)) was placed, and 1.00 g (25.00 mmol) of sodium hydroxide was added thereto. Then, while stirring the mixture at room temperature, 123.81 g (435.61 mmol) of titanium tetraisopropoxide was added so that the titanium concentration was adjusted to 9% by weight. The flask was immersed in an oil bath and heated with stirring at 120°C for 4 hours. The obtained titanium-containing solution was a transparent, homogeneous solution of pale yellow color. The haze value of this solution, as measured using a hazemeter (ND-1001 DP manufactured by Nippon Denshoku Industries Co., Ltd.), was 1.8%.

Examples 2 and 3

The same experiment was carried out following the procedure of Example 1, while varying the titanium concentration as indicated in Table 1. Here, the titanium concentration was adjusted by the amount of titanium tetraisopropoxide added. The results for evaluation of the appearance of the obtained titanium-containing solution were shown in Table 1.

Comparative Examples 1 to 3

The same experiment was carried out following the procedure of Example 1, while varying the titanium concentration as indicated in Table 1, except that ethylene glycol was used instead of the ethylene glycol/glycerol liquid mixture (mixing ratio: 85/15 (weight ratio)). Here, the titanium concentration was adjusted by the amount of titanium tetraisopropoxide added. The results for evaluation of the appearance of the obtained titanium-containing solution were shown in Table 1.

[Table 1]

|  | Ratio of ethylene glycol/glycerol (weight ratio) | Ti concentration (% by weight) | Appearance of the solution |
|---|---|---|---|
| Example 2 | 85/15 | 8 | ○ |
| Example 1 | 85/15 | 9 | ○ |
| Example 3 | 85/15 | 10 | ○ |
| Comp. Ex. 1 | 100/0 | 8 | ○ |
| Comp. Ex. 2 | 100/0 | 9 | × |
| Comp. Ex. 3 | 100/0 | 10 | × |
| ○: Transparent, homogeneous solution ×: Precipitate generation or white cloudy solution | | | |

As shown in Table 1, addition of glycerol to the solvent improves the homogeneous dissolubility of the titanium component. At the same time, addition of glycerol to the solvent also improves the maximum solubility of the titanium component, so that a titanium-containing solution having a higher titanium concentration can be prepared.

Example 4

The entire operation was carried out under a dry nitrogen atmosphere. In a 200-ml glass flask equipped with a reflux condenser, 87.75 g of an ethylene glycol/glycerol liquid mixture (mixing ratio: 93/7 (weight ratio)) was placed, and 0.376 g (20.89 mmol) of water was added thereto. Then, while stirring the mixture at room temperature, 11.875 g (41.78 mmol) of titanium tetraisopropoxide was added so that the titanium concentration was adjusted to 2% by weight, and the ratio of water/titanium was adjusted to 0.19/1 (weight ratio). The flask was immersed in an oil bath and heated with stirring at 120°C for 4 hours. The obtained titanium-containing solution was a colorless, transparent, homogeneous solution. The haze value of this solution measured in the same manner as in Example 1 was 1.1%. This solution remained consistently as the colorless, transparent, homogeneous solution during the preparation process.

When this solution was kept at room temperature for 4 weeks, there was observed no discoloration of the solution or generation of precipitate and the solution was remained as the colorless, transparent, homogeneous solution throughout the period.

Comparative Example 4

The same experiment was carried out following the procedure of Example 4, except that ethylene glycol was used instead of the ethylene glycol/glycerol liquid mixture (mixing ratio: 93/7 (weight ratio)). The obtained titanium-containing solution was a white cloudy solution containing a precipitate.

Reference Example 1

In the procedure of Example 4, a 200-ml glass flask equipped with a reflux condenser was charged with 87.75 g of an ethylene glycol/glycerol liquid mixture (mixing ratio: 93/7 (weight ratio)), which contained dehydrated ethylene glycol and dehydrated glycerol. The moisture content in the ethylene glycol/glycerol liquid mixture was 30 ppm. Then, while stirring the mixture at room temperature, 11.875 g (41.78 mmol) of titanium tetraisopropoxide was added thereto. During the addition of titanium tetraisopropoxide, generation of a white precipitate was observed. Immediately thereafter, 0.376 g (20.89 mmol) of water was added to this solution. The titanium concentration was 2% by weight, and the ratio of water/titanium was 0.19/1 (weight ratio). The flask was immersed in an oil bath and heated with stirring at 120°C for 4 hours. The obtained titanium-containing solution was a colorless, transparent, homogeneous solution. The haze value of this solution measured in the same manner as in Example 1 was 1.2%.

When this solution was kept at room temperature, there was observed no discoloration of the solution or generation of precipitate and the solution was remained as the colorless, transparent, homogeneous solution until the point of time passing 3 weeks. However, at the point of time passing 4 weeks, a white precipitate was observed in the solution.

It can be seen from Example 4 and Reference Example 1 that in order to increase the storage stability of a homogeneous titanium-containing solution, it is important to control the water content in the solvent when the titanium compound is added to the solvent.

Examples 5 to 11 and Comparative Examples 5 to 7

The same experiment was carried out following the procedure of Example 4, while varying the ratio of water/titanium (weight ratio) and the mixing ratio (weight ratio) of the ethylene glycol/glycerol liquid mixture as indicated in Table 2. Here, the amount of the ethylene glycol/glycerol liquid mixture added was adjusted to make the total amount of the solution 100 g. The results for evaluation of the appearance of the obtained titanium-containing solution were shown in Table 2.

[Table 2]

|  | Ratio of water/Ti (weight ratio) | Ratio of ethylene glycol/glycerol (weight ratio) | Appearance of the solution |
|---|---|---|---|
| Comp. Ex. 4 | 0.019 | 100/0 | ✕ |
| Example 4 | 0.019 | 93/7 | ○ |
| Example 5 | 0.019 | 85/15 | ○ |
| Example 6 | 0.019 | 70/30 | ○ |
| Example 7 | 0.019 | 50/50 | ○ |
| Comp. Ex. 5 | 0.019 | 0/100 | ✕ |
| Comp. Ex. 6 | 0.19 | 100/0 | ✕ |

(continued)

|  | Ratio of water/Ti (weight ratio) | Ratio of ethylene glycol/glycerol (weight ratio) | Appearance of the solution |
|---|---|---|---|
| Example 8 | 0.19 | 93/7 | ○ |
| Example 9 | 0.19 | 85/15 | ○ |
| Example 10 | 0.19 | 70/30 | ○ |
| Example 11 | 0.19 | 50/50 | ○ |
| Comp. Ex. 7 | 0.19 | 0/100 | × |
| ○: Transparent, homogeneous solution ×: Precipitate generation or white cloudy solution | | | |

As shown in Table 2, addition of glycerol to the solvent improves the homogeneous dissolubility of the titanium component, regardless of the extent of the ratio of water/titanium (weight ratio). However, when the glycerol concentration in the solvent excessively increases, the homogeneous dissolubility of the titanium component is lowered.

Example 12

The entire operation was carried out under a dry nitrogen atmosphere. In a 200-ml glass flask equipped with a reflux condenser, 81.63 g of an ethylene glycol/glycerol liquid mixture (mixing ratio: 85/15 (weight ratio)) was placed, 3.011 g (167.12 mmol) of water was added thereto, and 3.480 g (87.01 mmol) of sodium hydroxide was further added with stirring so as to completely dissolve the sodium hydroxide. Then, while stirring the mixture at room temperature, 11.875 g (41.78 mmol) of titanium tetraisopropoxide was added so that the titanium concentration was adjusted to 2% by weight, the ratio of sodium/titanium to 1/1 (weight ratio), and the ratio of water/titanium to 1.51/1 (weight ratio). The flask was immersed in an oil bath and heated with stirring at 120°C for 4 hours. The obtained titanium-containing solution was a colorless, transparent, homogeneous solution. The haze value of this solution measured in the same manner as in Example 1 was 1.0%.

Comparative Example 8

The same experiment was carried out following the procedure of Example 12, except that ethylene glycol was used instead of the ethylene glycol/glycerol liquid mixture (mixing ratio: 85/15 (weight ratio)). The obtained titanium-containing solution was a white cloudy solution containing a precipitate.

Examples 13 to 19 and Comparative Example 9

The same experiment was carried out following the procedure of Example 12, while varying the titanium concentration and the mixing ratio (weight ratio) of the ethylene glycol/glycerol liquid mixture as indicated in Table 3. Here, the amount of titanium tetraisopropoxide added, the amount of water added and the amount of sodium hydroxide added were adjusted so as to maintain the ratio of sodium/titanium at 1/1 (weight ratio) and the ratio of water/titanium at 1.51/1 (weight ratio). Also, the amount of the ethylene glycol/glycerol liquid mixture added was adjusted to make the total amount of the solution 100 g. The results for evaluation of the appearance of the obtained titanium-containing solution were shown in Table 3.

[Table 3]

|  | Ti concentration (% by weight) | Ratio of ethylene glycol/glycerol (weight ratio) | Appearance of the solution |
|---|---|---|---|
| Comp. Ex. 8 | 2 | 100/0 | × |
| Example 13 | 2 | 95/5 | ○ |
| Example 12 | 2 | 85/15 | ○ |
| Example 14 | 2 | 60/40 | ○ |
| Example 15 | 2 | 25/75 | ○ |

(continued)

|  | Ti concentration (% by weight) | Ratio of ethylene glycol/glycerol (weight ratio) | Appearance of the solution |
|---|---|---|---|
| Comp. Ex. 9 | 1 | 100/0 | ○ |
| Example 16 | 1 | 95/5 | ○ |
| Example 17 | 1 | 85/15 | ○ |
| Example 18 | 1 | 60/40 | ○ |
| Example 19 | 1 | 25/75 | ○ |
| ○: Transparent, homogeneous solution<br>×: Precipitate generation or white cloudy solution | | | |

As shown in Table 3, addition of glycerol to the solvent improves the maximum solubility of the titanium component, and thus a titanium-containing solution having a higher titanium concentration can be prepared.

Example 20

The same experiment was carried out following the procedure of Example 12, except that 79.72 g of an ethylene glycol/glycerol liquid mixture (mixing ratio: 85/15 (weight ratio)) was used instead of 81.63 g of the ethylene glycol/glycerol liquid mixture (mixing ratio: 85/15 (weight ratio)), and 5.395 g (87.01 mmol) of a sodium carbonate monohydrate was used instead of 3.480 g (87.01 mmol) of sodium hydroxide. The obtained titanium-containing solution was a colorless, transparent, homogeneous solution. The haze value of this solution measured in the same manner as in Example 1 was 1.0%.

Example 21

The same experiment was carried out following the procedure of Example 12, except that 80.23 g of an ethylene glycol/glycerol liquid mixture (mixing ratio: 85/15 (weight ratio)) was used instead of 81.63 g of the ethylene glycol/glycerol liquid mixture (mixing ratio: 85/15 (weight ratio)), and 4.882 g (87.01 mmol) of potassium hydroxide was used instead of 3.480 g (87.01 mmol) of sodium hydroxide. The obtained titanium-containing solution was a colorless, transparent, homogeneous solution. The haze value of this solution measured in the same manner as in Example 1 was 1.1%.

Example 22

The same experiment was carried out following the procedure of Example 12, while varying the temperature during heating with stirring to room temperature, 60°C and 180°C, respectively. The obtained titanium-containing solutions were each a colorless, transparent, homogeneous solution.

Example 23

The titanium-containing solution obtained in Example 12 was put into storage at 80°C under a nitrogen atmosphere, or at room temperature in the atmospheric air, for 30 days each. Since none of the titanium-containing solution showed cloudiness, generation of precipitate or discoloration of the solution, it was confirmed that the storage stability of the solution was excellent.

Example 24

The same experiment was carried out following the procedure of Example 12, while heating the solution with stirring to remove the low boiling point fraction, which mainly consisted of isopropanol produced during the reaction, by volatilization, with the reflux condenser being removed during the heating with stirring. The obtained titanium-containing solution was a colorless, transparent, homogeneous solution, and the content of the isopropanol contained in the titanium-containing solution was 0.10% by weight. The haze value of this solution measured in the same manner as in Example 1 was 1.0%.

Example 25

A hexadecamer titanium compound in a white powder form, represented by the molecular formula $Ti_{16}O_{16}$ $(OC_2H_5)_{32}$, was synthesized according to the literature (J. Chem. Soc. Dalton Trans., 1991, p.1999).

Hereinafter, the entire operation was carried out under a dry nitrogen atmosphere. In a 200-ml glass flask equipped with a reflux condenser, 76.19 g of an ethylene glycol/glycerol liquid mixture (mixing ratio: 85/15 (weight ratio)) was placed, 3.011 g (167.12 mmol) of water was added thereto, and 3.480 g (87.01 mmol) of sodium hydroxide was further added with stirring so as to completely dissolve the sodium hydroxide. Then, while stirring the mixture at room temperature, 6.434 g (41.78 mmol in terms of titanium atoms) of the above synthesized $Ti_{16}O_{16}(OC_2H_5)_{32}$ was added so that the titanium concentration was adjusted to 2% by weight, the ratio of sodium/titanium to 1/1 (weight ratio), and the ratio of water/titanium to 1.51/1 (weight ratio). The flask was immersed in an oil bath and heated with stirring at 120°C for 4 hours. The obtained titanium-containing solution was a colorless, transparent, homogeneous solution. The haze value of this solution measured in the same manner as in Example 1 was 1.3%.

Example 26

The entire operation was carried out under a dry nitrogen atmosphere. In a 200-ml glass flask equipped with a reflux condenser, 90.82 g of an ethylene glycol/glycerol liquid mixture (mixing ratio: 85/15 (weight ratio)) was placed, 1.505 g (80.27 mmol) of water was added thereto, and 1.740 g (43.50 mmol) of sodium hydroxide was further added with stirring so as to completely dissolve the sodium hydroxide. Then, while stirring the mixture at room temperature, 5.938 g (20.89 mmol) of titanium tetraisopropoxide was added so that the titanium concentration was adjusted to 1% by weight, the ratio of sodium/titanium to 1/1 (weight ratio), and the ratio of water/titanium to 1.51/1 (weight ratio). The flask was immersed in an oil bath and heated with stirring at 120°C for 4 hours. The obtained titanium-containing solution was a colorless, transparent, homogeneous solution. The haze value of this solution measured in the same manner as in Example 1 was 1.0%.

A slurry prepared by mixing 6,458 parts by weight/hr of high purity terephthalic acid and 2,615 parts by weight/hr of ethylene glycol, was continuously supplied with stirring to a flow system reactor which was maintained at 260°C and 90 kPaG under a nitrogen atmosphere, to carry out an esterification reaction. The reaction was carried out in the steady operation mode such that 33,500 parts by weight of the reaction liquor comprising the slurry and the esterification product stayed in the reactor. In this esterification reaction, a liquid mixture of water and ethylene glycol was distilled off.

The esterification product (lower condensate) was continuously drawn out of the system so as to control the mean residence time of the esterification product to be 3.5 hours.

The number average molecular weight of the lower condensate of ethylene glycol and terephthalic acid obtained in the above was 600 to 1,300 (trimer to pentamer).

A polycondensation reaction of the above-obtained lower condensate was carried out using the above-obtained titanium-containing solution as the catalyst for polycondensation. For the amount of catalyst added, the above-described titanium-containing solution was added in an amount of 18 ppm in terms of titanium atoms with respect to the produced polyethylene terephthalate, and phosphoric acid was also added in an amount of 6 ppm in terms of phosphorus atoms with respect to the produced polyethylene terephthalate. Polycondensation was carried out at 285°C and 0.1 kPa to produce a liquid phase polycondensed polyethylene terephthalate having an intrinsic viscosity of 0.64 dl/g. The duration of polymerization was 1.4 hours.

Next, thus obtained liquid phase polycondensed polyethylene terephthalate was precrystallized at 170°C for 2 hours, and then the precrystallized polyester resin was heated to 220°C under a nitrogen gas atmosphere in order to increase the molecular weight by solid phase polymerization until the intrinsic viscosity increased from 0.64 dl/g to 0.84 dl/g. Here, the duration of solid phase polycondensation required was 6.2 hours.

Comparative Example 10

A titanium-containing solution was prepared according to the same process for preparation of the titanium-containing solution as that of Example 26, except that ethylene glycol was used instead of the ethylene glycol/glycerol liquid mixture (mixing ratio: 85/15 (weight ratio)). The resulting titanium-containing solution was a colorless, transparent, homogeneous solution.

Using the above-obtained titanium-containing solution, polyethylene terephthalate was polymerized by the same method of polyethylene terephthalate polymerization as that of Example 26. The duration of polymerization was 1.8 hours.

Next, the resulting liquid phase polycondensed polyethylene terephthalate was precrystallized at 170°C for 2 hours, and then the precrystallized polyester resin was heated to 220°C under a nitrogen gas atmosphere in order to increase the molecular weight by solid phase polymerization until the intrinsic viscosity increased from 0.64 dl/g to 0.84 dl/g. Here, the duration of solid phase polycondensation required was 7.8 hours.

Upon comparison of Example 26 and Comparative Example 10, it can be seen that coexistence of glycerol during the preparation of the titanium-containing solution results in the obtained titanium-containing solution to have a higher activity as the polyester polymerization catalyst.

Example 27

A continuous polyester polycondensation apparatus consisting of two esterification reactors and three polycondensation reactors was operated at an output of about 60 tons/day. The operation conditions for the esterification reactors were such that the first esterification reactor was run at 260 to 270°C and at 100 to 110 kPa for 0.5 to 5 hours, and the second esterification reactor was run at 260 to 270°C and at 100 to 110 kPa for 0.5 to 3 hours.

The titanium-containing solution obtained in Example 12 was added to the second esterification reactor as the polycondensation catalyst.

Here, for the amount of the catalyst added, the titanium-containing solution of Example 12 was continuously added with a constant flow feed pump in an amount of 18 ppm in terms of titanium atoms with respect to the produced polyethylene terephthalate, and phosphoric acid was continuously added in an amount of 6 ppm in terms of phosphorus atoms with respect to the produced polyethylene terephthalate.

The lower condensate of a predetermined degree of polymerization obtained in the second esterification reactor was transferred to the polycondensation reactor. The polycondensation conditions therein were such that the first polycondensation reactor was run at 260 to 270°C and at 5 to 12 kPa for about 1 hour, the second polycondensation reactor was run at 265 to 275°C and at 0.7 kPa for about 1 hour, and the third polycondensation reactor was run at 275 to 285°C and at 0.3 kPa for about 1 hour. The resulting polyethylene terephthalate was cooled with cold water and cut. A polyethylene terephthalate having an intrinsic viscosity of 0.64 dl/g was obtained.

After 10 days of continuous operation, no blocking or deposition of solids was observed in the supply line for the titanium-containing solution, and there were no solids remaining in the bottom part of the titanium-containing solution reservoir. It was found that the titanium-containing solution was supplied very uniformly and stably.

Furthermore, when the ethylene glycol recovered from the distillates from each esterification reactor and each polycondensation reactor was analyzed, glycerol was not detected. It can be seen that glycerol, which is a titanium solubility promoter for the titanium-containing polyester polymerization catalyst, advantageously does not have adverse effect on the quality of the recovered ethylene glycol.

Example 28

The entire operation was carried out under a dry nitrogen atmosphere. In a 200-ml glass flask equipped with a reflux condenser, 59.2 g of an ethylene glycol/glycerol liquid mixture (mixing ratio: 85/15 (weight ratio)) was placed, and 1.50 g of water was added thereto. Then, while stirring the mixture at room temperature, 5.94 g of titanium tetraisopropoxide was added. The flask was immersed in an oil bath and heated with stirring at 120°C for 4 hours. The obtained titanium-containing solution was a colorless, transparent, homogeneous solution. The haze value of this solution measured in the same manner as in Example 1 was 1.3%.

A 200-ml glass flask was charged with 31.6 g of an ethylene glycol/glycerol liquid mixture (mixing ratio: 85/15 (weight ratio)), and 1.74 g of sodium hydroxide was added thereto. Then, the mixture was stirred to completely dissolve sodium hydroxide.

The titanium-containing solution and the sodium mixed solution were mixed at room temperature. The titanium content in this solution as measured by ICP analysis was 1.0% by weight, and the sodium content was 1.0% by weight.

The particle size distribution of the titanium compound in the titanium-containing solution was shown in Table 4.

A lower condensate of terephthalic acid and ethylene glycol was prepared as follows.

In an autoclave, 13 kg of high purity terephthalic acid, 4.93 kg of ethylene glycol and 6.88 g of a 20% aqueous solution of tetraethylammonium hydroxide were introduced and reacted with stirring at a temperature of 260°C and a pressure of 1.7 kg/cm$^2$ for 6 hours under a nitrogen atmosphere. Water produced in this reaction was always distilled off out of the system.

The intrinsic viscosity of the thus obtained lower condensate was 0.28 dl/g.

To the thus obtained lower condensate, the titanium-containing solution was added as a catalyst, and a liquid phase polycondensation reaction was carried out.

For the respective amounts of catalyst added, the titanium-containing solution was added in an amount of 18 ppm in terms of titanium atoms with respect to the produced polyethylene terephthalate, and phosphoric acid was also added in an amount of 6 ppm in terms of phosphorus atoms with respect to the produced polyethylene terephthalate. Thus, polycondensation was carried out at 280°C and at 0.1 kPa (1 Torr). The time taken to obtain a liquid phase polycondensed polyethylene terephthalate having an intrinsic viscosity of 0.61 dl/g was measured, and the liquid phase polymerization rate was calculated therefrom. The results were shown in Table 4.

Next, the obtained liquid phase polycondensed polyethylene terephthalate was precrystallized at 170°C for 2 hours and then heated at 215°C for 9 hours under a nitrogen gas atmosphere. The intrinsic viscosity of the resulting solid phase polycondensed polyethylene terephthalate was measured, and the solid phase polycondensation rate was calculated therefrom. The results were shown in Table 4.

The color tone of the resulting polyethylene terephthalate chip was measured with a 45° diffusion type colorimeter (SQ-300H manufactured by Nippon Denshoku Industries Co., Ltd.). The results were shown in Table 4.

Further, the resulting polyethylene terephthalate was dissolved by heating in o-cresol, and the COOH group concentration was measured by adding chloroform to the solution and titrating the solution with a potentiometric titration apparatus, using an aqueous NaOH solution as the standard solution. The results were shown in Table 4.

The obtained polyethylene terephthalate was dried with a dehumidifying air dryer at 170°C for 4 hours, in order to reduce the moisture content in the resin after drying to not more than 40 ppm. The dried polyethylene terephthalate was molded with an injection molding machine M-70B (tradename, Meiki Co., Ltd.) at 275°C to obtain a stepped rectangular plate-like molded product. The stepped rectangular plate-like molded product had a shape as illustrated in Fig. 1, with the thickness of the A portion being about 6.5 mm, the thickness of the B portion being about 5 mm, and the thickness of the C portion being about 4 mm.

The haze value of the 5-mm thick portion of the obtained rectangular plate-like molded product was measured three times with a hazemeter NDH-20D (tradename, manufactured by Nippon Denshoku Industries Co., Ltd.), and the average value thereof was taken for the evaluation of the haze of the product. The results were shown in Table 4.

Example 29

The entire operation was carried out under a dry nitrogen atmosphere. In a 200-ml glass flask equipped with a reflux condenser, 90.8 g of an ethylene glycol/glycerol liquid mixture (mixing ratio: 85/15 (weight ratio)) was placed, 1.50 g of water was added thereto, and 1.74 g of sodium hydroxide was further added with stirring so as to completely dissolve the sodium hydroxide. Then, while stirring the mixture at room temperature, 5.94 g of titanium tetraisopropoxide was added. The flask was immersed in an oil bath and heated with stirring at 120°C for 4 hours. The obtained titanium-containing solution was a colorless, transparent, homogeneous solution. The haze value of this solution measured in the same manner as in Example 1 was 1.0%. The titanium content in this solution as measured by ICP analysis was 1.0% by weight, and the sodium content was 1.0% by weight.

The particle size distribution of the titanium compound in the titanium-containing solution was shown in Table 4.

Polyester polymerization was carried out in the same manner as in Example 28, except that the titanium-containing solution obtained in the present Example was used as the catalyst. The results were shown in Table 4.

Example 30

The entire operation was carried out under a dry nitrogen atmosphere. In a 200-ml glass flask equipped with a reflux condenser, 94.1 g of an ethylene glycol/glycerol liquid mixture (mixing ratio: 85/15 (weight ratio)) was placed, and 0.75 g of water was added thereto. Then, while stirring the mixture at room temperature, 5.94 g of titanium tetraisopropoxide was added. The flask was immersed in an oil bath and heated with stirring at 90°C for 4 hours. The obtained titanium-containing solution was a colorless, transparent, homogeneous solution. The haze value of this solution measured in the same manner as in Example 1 was 1.1%. The titanium content in this solution as measured by ICP analysis was 1.0% by weight.

The particle size distribution of the titanium compound in the titanium-containing solution was shown in Table 4.

Polyester polymerization was carried out in the same manner as in Example 28, except that the titanium-containing solution obtained in the present Example was used as the catalyst. The results were shown in Table 4.

Comparative Example 11

To a 1,000-ml glass beaker, 500 ml of deionized water was weighed and introduced, and after cooling the beaker in an ice bath, 5 g of titanium tetrachloride was added dropwise with stirring. When the generation of hydrogen chloride stopped, the beaker was taken out of the ice bath, and while stirring the mixture at room temperature, 25% aqueous ammonia was added dropwise to adjust the pH of the liquid to 9. To this, a 15% aqueous solution of acetic acid was added dropwise with stirring at room temperature, in order to bring the pH of the liquid to 5. The precipitate formed was separated by filtration. After washing, water containing 30% by weight of ethylene glycol was added to the precipitate to form a slurry having a slurry concentration of 2.0% by weight. The slurry was maintained for 30 minutes and then subjected to granulation drying at a temperature of 90°C using a two fluid nozzle type spray dryer, to give a solid hydrolysate (solid titanium-containing compound).

The particle size distribution of the resulting solid titanium-containing compound was 0.5 to 20 μm, and the average particle size was 1.8 μm.

The content of metallic titanium in the solid titanium-containing compound as measured by ICP analysis was 34.8% by weight.

The molecular weight of the solid titanium-containing compound was measured according to ESI-TOF/MS; however, only few peaks were observed within the detectable region of up to molecular weight of 15,000, and thus the molecular weight was assumed to be 15,000 or higher. The degree of polymerization of the titanium compound according to the Equation 1 was calculated to be 109 or higher.

Next, to a 300-ml glass flask, 170 g of ethylene glycol and 30 g of glycerol were weighed and introduced. To this, 3.48 g of sodium hydroxide and 5.75 g of the above-mentioned solid titanium-containing compound were added and dissolved by heating at 130°C for 2 hours, so as to obtain a titanium-containing solution. The titanium content in this solution as measured by ICP analysis was 1.0% by weight, and the sodium content was 1.0% by weight.

The particle size distribution of the titanium compound in this titanium-containing solution was shown in Table 4.

Polyester polymerization was carried out in the same manner as in Example 28, except that the titanium-containing solution obtained in the present Comparative Example was used as the catalyst. The results were shown in Table 4.

Comparative Example 12

To a 300-ml glass flask, 168.3 g of ethylene glycol and 29.7 g of glycerol were weighed and introduced. To this 2.0 g of water and 5.75 g of the solid titanium-containing compound prepared in Comparative Example 11 were added and dissolved by heating at 170°C for 2 hours, to obtain a titanium-containing solution. The titanium content in this solution as measured by ICP analysis was 1.0% by weight.

The particle size distribution of the titanium compound in this titanium-containing solution was shown in Table 4.

Polyester polymerization was carried out in the same manner as in Example 28, except that the titanium-containing solution obtained in the present Comparative Example was used as the catalyst. The results were shown in Table 4.

Comparative Example 13

A commercially available submicron titanium dioxide slurry (HPA-15R manufactured by Catalysts & Chemicals Industries Co., Ltd.) was used without any modification. The particle size distribution of the titanium compound in this titanium-containing solution was shown in Table 4.

Polyester polymerization was carried out in the same manner as in Example 28, except the titanium-containing solution obtained in the present Comparative Example was used as the catalyst. The results were shown in Table 4.

Example 31

Polyester polymerization was carried out in the same manner as in Example 28, except that 2.3 ppm of Solvent Blue 104 and 2.3 ppm of Pigment Red 263, with respect to the produced polyethylene terephthalate, were added as the color adjusting agents together with the catalyst.

The color tone of the resulting solid phase polycondensed polyethylene terephthalate chip was measured with a 45° diffusion type colorimeter (SQ-300H manufactured by Nippon Denshoku Industries Co., Ltd.), the following results being obtained: L-value: 79.4, a-value: 0.4 and b-value: -4.0.

Example 32

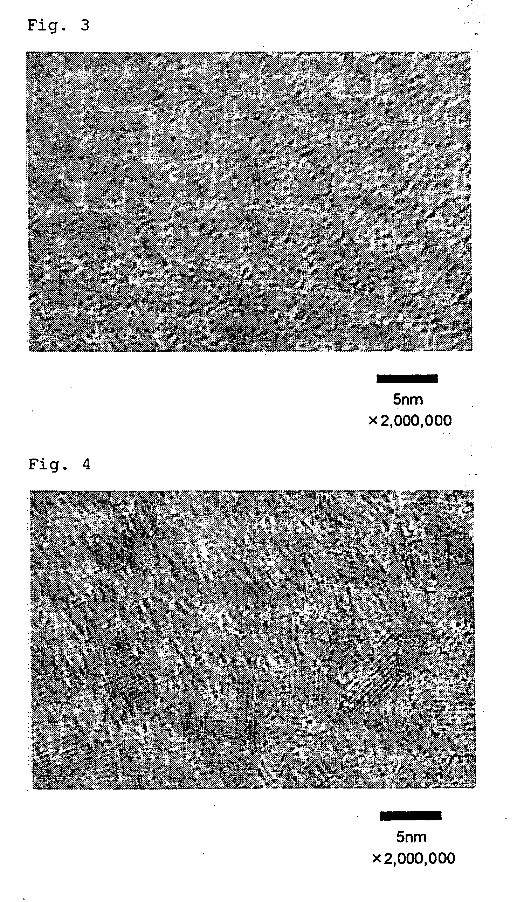

The titanium-containing solution obtained in Example 30 was diluted with ethylene glycol to 10 folds and dropped on a copper mesh coated with a collodion membrane, and after removing the solvent in vacuo at room temperature for 1 hour, the sample was observed with a transmission electron microscope JEM-2010 (manufactured by JEOL, Ltd., accelerating voltage: 120 kV). The resulting micrograph was shown in Fig. 3. No regular structure was observed within the field of view.

Thereafter, irradiation of electron beam was continued for 10 minutes. The micrograph of the same field of view was shown in Fig. 4. Since a large number of regular lamellar structures with a layer interval of about 0.4 nm were observed, it was confirmed that crystals are produced. This is due to the rearrangement of titanium atoms resulting from the irradiation of electron beam energy.

From the comparison of Fig. 3 and Fig. 4, it can be seen that the titanium compound in the catalyst obtained in Example 30 is substantially amorphous.

In Table 4, the crystallinity of each Ti compound was confirmed by the above-described method.

[Table 4]

|  | Example 28 | Example 29 | Example 30 | Comp. Ex. 11 | Comp. Ex. 12 | Comp. Ex. 13 |
|---|---|---|---|---|---|---|
| Average particle size (nm) | 0.6 | 1.2 | 3.2 | 6.8 | 8.0 | 15 |
| Proportion of 0.4 nm to 5 nm (vol%) | 96 | 100 | 87 | 5 | < 0.1 | < 0.1 |
| Proportion of 0.4 nm to 2 nm (vol%) | 92 | 98 | 0.4 | < 0.1 | < 0.1 | < 0.1 |
| Proportion of 0.4 nm to 1 nm (vol%) | 75 | 14 | < 0.1 | < 0.1 | < 0.1 | < 0.1 |
| Crystallinity of Ti compound | None | None | None | None | None | Present |
| Liquid phase polymerization rate (dl/g/hr) | 0.494 | 0.484 | 0.420 | 0.384 | 0.316 | 0.15 |
| Solid phase polymerization rate (dl/g/hr) | 0.0282 | 0.0244 | 0.0253 | 0.0236 | 0.0202 | 0.007 |
| COOH (eq/ton) | 10 | 10 | 10 | 16 | 16 | 16 |
| b-Value | 9.7 | 8.2 | 9.2 | 6.3 | 6.5 | 9.5 |
| 5 mm Haze (%) | 9.4 | 1.3 | 1.8 | 4.4 | 1.5 | 8.0 |

Industrial Applicability

According to the present invention, there is provided a titanium-containing solution having excellent storage stability of the solution and containing the titanium component at a high concentration.

The titanium-containing solution of the invention exhibits excellent supply uniformity and high catalyst performance, and it can be used as a catalyst for polyester preparation which does not have adverse effect on the quality of the aliphatic diols to be recovered and recycled.

By using the catalyst for polyester preparation of the invention, a process for preparation of a polyester resin with high productivity, a high quality polyester resin obtained by this catalyst, and a blow molded product comprising this polyester resin can be provided.

The titanium-containing solution of the invention, which contains titanium at a high concentration and has excellent homogeneity and storage stability, can be used in various applications, in addition to the use as catalyst for polyester preparation, such as various catalysts and starting material thereof, viscosity adjusting agent, crosslinking agent, resin modifier, coating material modifier, ink modifier, surface treating agent, curing accelerator, the raw material for thin film coating materials, the raw material for photocatalytic materials, and the raw material for various titanium-containing ceramics produced by the sol-gel process.

Moreover, according to the invention, a titanium-containing solution which is particularly useful as a catalyst for polyester preparation can be provided. Also there are provided a process for preparing a polyester resin with high productivity using the catalyst, and a high quality blow molded product comprising the polyester resin obtained by this process for preparation.

**Claims**

1.   A titanium-containing solution containing:

> (A) 0.05 to 20% by weight, in terms of titanium atoms, of a titanium compound,
> (B) 4 to 99% by weight of an aliphatic diol, and

(C) 0.1 to 95% by weight of a polyhydric alcohol having 3 or more hydroxyl groups,

wherein the titanium-containing solution is prepared from a monomeric titanium compound or a polymeric titanium compound including not more than 100 units, the aliphatic diol and the polyhydric alcohol having 3 or more hydroxyl groups as starting materials.

2. A titanium-containing solution according to Claim 1, which contains water and/or a basic compound in a total proportion of 50% by weight or less.

3. A process for preparing a titanium-containing solution containing a titanium compound, which is a monomeric titanium compound or a polymeric titanium compound including not more than 100 units, an aliphatic diol and a polyhydric alcohol having 3 or more hydroxyl groups as starting materials, wherein 0.05 to 20% by weight, in terms of titanium atoms, of the titanium compound, 4 to 99% by weight of the aliphatic diol, and 0.1 to 95% by weight of the polyhydric alcohol having 3 or more hydroxyl groups are used with respect to the total amount of the titanium-containing solution.

4. A process according to Claim 3, wherein water and/or a basic compound are used in a total proportion of 50% by weight or less.

5. Use of a titanium-containing solution as defined in Claim 1 or Claim 2 as a catalyst for the preparation of a polyester.

6. A process for preparing a polyester resin comprising polycondensing an aromatic dicarboxylic acid or an ester-forming derivative thereof with an aliphatic diol or an ester-forming derivative thereof in the presence of a titanium-containing solution as defined in Claim 1 or Claim 2 as a catalyst.


**Patentansprüche**

1. Titanhaltige Lösung, enthaltend:

(A) 0,05 bis 20 Gew.%, in bezug auf die Titanatome, einer Titanverbindung,
(B) 4 bis 99 Gew.% eines aliphatischen Diols, und
(C) 0,1 bis 95 Gew.% eines mehrwertigen Alkohols mit 3 oder mehr Hydroxylgruppen,

wobei die titanhaltige Lösung aus einer monomeren Titanverbindung oder einer polymeren Titanverbindung, die nicht mehr als 100 Einheiten einschliesst, dem aliphatischen Diol und dem mehrwertigen Alkohol mit 3 oder mehr Hydroxylgruppen als Ausgangsmaterialien hergestellt wird.

2. Titanhaltige Lösung gemäss Anspruch 1, die Wasser und/oder eine basische Verbindung in einem Gesamtanteil von 50 Gew.% oder weniger enthält.

3. Verfahren zur Herstellung einer titanhaltigen Lösung, enthaltend eine Titanverbindung, die eine monomere Titanverbindung oder eine polymere Titanverbindung ist, die nicht mehr als 100 Einheiten einschliesst, den aliphatischen Diol und einen mehrwertigen Alkohol mit 3 oder mehr Hydroxylgruppen als Ausgangsmaterialien, wobei 0,05 bis 20 Gew.%, in bezug auf die Titanatome, einer Titanverbindung, 4 bis 99 Gew.% eines aliphatischen Diols und 0,1 bis 95 Gew.% eines mehrwertigen Alkohols mit 3 oder mehr Hydroxylgruppen in bezug auf die Gesamtmenge der titanhaltigen Lösung verwendet werden.

4. Verfahren gemäss Anspruch 3, wobei das Wasser und/oder die basische Verbindung in einem Gesamtanteil von 50 Gew.% oder weniger verwendet werden.

5. Verwendung einer titanhaltigen Lösung gemäss Anspruch 1 oder Anspruch 2 als Katalysator bei der Herstellung eines Polyesters.

6. Verfahren zur Herstellung eines Polyesterharzes, umfassend das Polykondensieren einer aromatischen Dicarbonsäure oder eines esterbildenden Derivats davon mit einem aliphatischen Diol oder einem esterbildenden Derivat davon in Gegenwart einer titanhaltigen Lösung, wie in Anspruch 1 oder Anspruch 2 definiert, als Katalysator.

**Revendications**

1. Solution contenant du titane qui contient :

   (A) 0,05 à 20% en poids, en termes d'atomes de titane, d'un composé de titane,
   (B) 4 à 99% en poids d'un diol aliphatique, et
   (C) 0,1 à 95% en poids d'un alcool polyhydrique ayant trois groupes hydroxyles ou plus,

   où la solution contenant du titane est préparée à partir d'un composé de titane monomère ou d'un composé de titane polymère comportant au plus 100 unités, le diol aliphatique et l'alcool polyhydrique ayant trois groupes hydroxyles ou plus comme matières premières.

2. Solution contenant du titane selon la revendication 1, qui contient de l'eau et/ou un composé basique dans une proportion totale de 50% en poids ou moins.

3. Processus de préparation d'une solution contenant du titane qui contient un composé de titane, qui est un composé de titane monomère ou un composé de titane polymère comportant au plus 100 unités, un diol aliphatique et un alcool polyhydrique ayant trois groupes hydroxyles ou plus comme matières premières, où 0,05 à 20% en poids, en termes d'atomes de titane, du composé de titane, 4 à 99% en poids du diol aliphatique, et 0,1 à 95% en poids de l'alcool polyhydrique ayant trois groupes hydroxyles ou plus, sont utilisés par rapport à la quantité totale de la solution contenant du titane.

4. Processus selon la revendication 3, dans lequel de l'eau et/ou un composé basique est/sont utilisé(e)/utilisés dans une proportion totale de 50% en poids ou moins.

5. Utilisation d'une solution contenant du titane telle que définie dans la revendication 1 ou 2 en tant que catalyseur pour la préparation d'un polyester.

6. Processus de préparation d'une résine de polyester comprenant la polycondensation d'un acide dicarboxylique aromatique ou d'un dérivé de celui-ci formant un ester avec un diol aliphatique ou un dérivé de celui-ci formant un ester en présence d'une solution contenant du titane telle que définie dans la revendication 1 ou 2 en tant que catalyseur.

Fig. 1

Fig. 2

Fig. 3

5nm
×2,000,000

Fig. 4

5nm
×2,000,000

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9954039 A
- JP 7207010 A
- JP 3072653 B
- JP 56129220 A
- JP 2002543227 T
- JP 58118824 A
- JP 2987853 B
- JP 61025738 B
- JP 10081646 A
- JP 2001524536 T
- JP 2000119383 A
- JP 2001200045 A
- JP 7064920 B

### Non-patent literature cited in the description

- **F. MIZUKAMI et al.** *Stud. Surf. Sci. Catal.,* 1987, vol. 31, 45
- *J. Chem. Soc. Dalton Trans.,* 1991, 1999